# EUROPEAN PATENT SPECIFICATION

(11) **EP 1 856 861 B1**
(45) Date of publication and mention of the grant of the patent: **18.09.2013**
(21) Application number: 06735468.8
(22) Date of filing: 17.02.2006
(51) Int. Cl.: H04L 12/28

(54) **TECHNIQUES FOR OVERSUBSCRIBING EDGE NODES FOR VIRTUAL PRIVATE NETWORKS**
VERFAHREN ZUR ÜBERZEICHNUNG VON RANDKNOTEN FÜR VIRTUELLE PRIVATE NETZWERKE
TECHNIQUES DESTINEES AU SURABONNEMENT DE NOEUDS DE RESEAU, DESTINEES AUX RESEAUX VIRTUELS PRIVES

(30) Priority: 19.02.2005 US 654661 P; 01.06.2005 US 142768; 02.06.2005 US 143546; 02.06.2005 US 143551; 06.06.2005 US 145752; 16.11.2005 US 281269
(43) Date of publication of application: 21.11.2007
(73) Proprietor: Cisco Technology, Inc., San Jose, CA 95134 (US)
(72) Inventor: TOWNSLEY, William Mark, Nashville, Tennessee 37121 (US); BOOTH, Earl, III, Raleigh, North Carolina 27613 (US); LUO, Wei, Berkeley, CA 94709 (US); WEBER, Greg, Knoxville, Tennessee 37919 (US); WILKIE, George, Dalgety Bay Fife KY11 9FX (GB)
(74) Representative: Kazi, Ilya
(86) International application number: PCT/US2006/005817
(87) International publication number: WO 2006/089214

(56) References cited:
- EP-A1- 1 069 801
- EP-A1- 1 458 134
- EP-A2- 0 996 255
- US-A1- 2003 110 276
- US-A1- 2005 097 203
- US-A1- 2005 114 490
- US-A1- 2006 018 300

## Description

### CROSS-REFERENCE TO RELATED APPLICATIONS

This application is related to US Appln. Ser. No. 11/142,768 (Publication No. US 2006/190570), filed June 1, 2005 (hereinafter *Booth I*)*.*

This application is related to US Appln. Ser. No. 11/143,546 (Publication No. US 2006/187854), filed June 2, 2005 (hereinafter *Booth II*)*.*

This application is related to US Appln. Ser. No. 11/143,551 (Publication No. US 2006/187855), filed June 2, 2005 (hereinafter *Booth III*)*.*

This application is related to US Appln. Ser. No. 11/145,752 (Publication No. US 2006/187856), filed June 6, 2005 (hereinafter *Booth IV*)*.*

### BACKGROUND OF THE INVENTION

### 1. Field of the Invention

The present invention relates to using one or more virtual private networks (VPNs) based on layer 2 protocols on a packet switching infrastructure that belongs to a trusted service provider; and in particular to zero touch provisioning for automatically configuring each customer interface to a provider edge network node, such as for oversubscribed VPN operation involving more network resources than can be supported at the same time.

### 2. Description of the Related Art

Networks of general purpose computer systems and other devices connected by external communication links are well known and widely used in commerce. The networks often include one or more network devices that facilitate the passage of information between the computer systems and other devices. A network node is a network device or computer system or other device connected by the communication links.

Information is exchanged between network nodes according to one or more of many well known, new or still developing protocols. In this context, a "protocol" consists of a set of rules defining how the nodes interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model. The OSI Reference Model is generally described in more detail in Section 1.1 of the reference book entitled Interconnections Second Edition, by Radia Perlman, published September 1999.

Communications between nodes are typically effected by exchanging discrete packets of data. Each packet typically comprises 1] header information associated with a particular protocol, and 2] pay load information that follows the header information and contains information that may be processed independently of that particular protocol. In some protocols, the packet includes 3] trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, usually higher layer of the OSI Reference Model. The header for a particular protocol typically indicates a type for the next protocol contained in its payload. The payload protocol is said to be encapsulated in the header protocol. The headers included in a packet traversing multiple heterogeneous networks, such as the Internet, typically include a physical (layer 1) header, a data-link (layer 2) header, an internetwork (layer 3) header and a transport (layer 4) header, as defined by the Open Systems Interconnection (OSI) Reference Model.

The layer 2 tunneling protocol (L2TP) is a link layer (layer 2) protocol established to provide a persistent virtual circuit as a tunnel between two end nodes of a trusted subnetwork. In network parlance, a tunnel for data is simply a protocol that encapsulates that data. The persistent tunnel, or virtual circuit on a packet switched network is often called a pseudo-wire. L2TP facilitates the tunneling of point to point protocol (PPP) packets across an intervening network in a way that is as transparent as possible to both end-users and applications. Using L2TP tunneling, an Internet Service Provider (ISP), or other access service provider, can create a pseudo wire to link a customer's remote sites or remote users with corporate home networks. More recent versions of L2TP facilitate tunneling of a number of data link types, including, but not limited to, Point to Point Protocol (PPP), Frame Relay (FR), Asynchronous Transfer Mode (ATM), High Level Data Link Control (HDLC) and Ethernet. L2TP is described at the time of this writing in Internet Engineering Task Force (IETF) request for comments (RFC) 2661 which can be found in a file named rfc2661.txt, which can be found, along with other RFC files, at the World Wide Web domain www.ietf.org in the file directory named rfc. The entire contents of RFC 2661 are hereby incorporated by reference as if fully set forth herein. L2TPv3 is described in RFC 3817 available in file rfc3817.txt in the same directory.

Some protocols follow a layer 2 protocol and precede a layer 3 protocol; and are said to be layer 2.5 protocols. For example, the multi-protocol layer switching (MPLS) is a layer 2.5 protocol that provides for the designation, routing, forwarding and switching of traffic flows through a network and supports the transfer of multiple data link (layer 2) types. MPLS is described at the time of this writing in IETF RFC 3031 and RFC 3032 which can be found in files named rfc3031.txt and rfc3031.tx.

A virtual private network (VPN) is a technology to logically separate the data packets traveling over the same physical network, so that a user of one VPN does not see the data communicated between users of a different VPN. Access service providers frequently offer to customers VPNs that are implemented as one or more pseudo wires on a packet switched network (PSN) infrastructure, such as a network of routers using the Internet Protocol (IP) as a layer 3 protocol or using MPLS as a layer 2.5 protocol. A common approach for providing the tunneling functions for a VPN is to use the layer 2 tunneling of L2TPv3 as a payload in IP data packets. In some approaches, a protocol for Any Transport over MPLS (AToM) available from CISCO SYSTEMS(TM), Inc. of San Jose California is used to support layer 2 tunneling in a payload in MPLS data packets. Then layer 2 protocols, such as PPP, FR, ATM, HDLC, Ethernet are used in these tunnels to transmit customer data or control plane information over the VPN.

A customer contracts with a service provider, such as an ISP, to provide a VPN among customer sites and to support certain kinds and amounts of data traffic over that VPN. In response, the service provider configures interfaces to customer equipment on several intermediate network nodes at the edge of the service provider network (so-called "provider edge nodes," PE, or simply "edge nodes"). Each interface is configured to communicate the type of traffic designated for that interface and encapsulate it in one or more tunnels, each tunnel directed to one of one or more other interfaces on other edge nodes of the service provider network. In the parlance of this technology, configuring each affected interface on each affected edge node provisions the VPN.

A PE interface to customer equipment (CE) is called an attachment circuit (AC) or port. Each physical interface can support one or more logical attachment circuits. For example, a single physical interface for ATM traffic can support multiple ATM virtual circuits, which may be directed to different VPNs; each ATM virtual circuit is considered a different attachment circuit to be configured. Configuration data specifies values for one or more parameters for each attachment circuit (AC). The parameters and values depend on the layer 2 protocol to be supported in the VPN, the topology of the VPN, and the tunneling protocol used to establish the pseudo wires. Example configuration data for a logical ATM AC specifies a percentage of total bandwidth devoted to the logical AC, a cell-packing value, the other PE devices in the topology, and a control plane protocol to establish and maintain pseudo wires among the connected PE.

Currently, provisioning the VPN is a manual process, in which a network administrator determines which data packets on each interface are sent out on which link to the provider network using which designations to be recognized by a subsequent intermediate nodes and edge node as a separate tunnel. The manual provisioning process is tedious and error prone. Furthermore, when a new piece of customer equipment is connected to an edge node, that equipment is unable to communicate over the VPN unless and until the human administrator provisions the VPN to add the new interface. Thus the process is subject to delays. The delays grow in severity as the human administrator becomes busier. The tedium and propensity for error increase with the complexity of the VPN topology (e.g., as the numbers of interfaces and edge nodes increase).

In some cases, for example when a customer has many remote sites or several customers share the same attachment circuit, the number of logical ACs to be carried from CE to PE exceeds the number that can be simultaneously supported by the physical media. For example the maximum data rate (e.g., expressed in bytes per second) for each of several ACs exceeds the bandwidth capacity of the physical link. In such circumstances, prior approaches have introduced a second physical link to carry the excess traffic that can not be carried by the first link.

There are several disadvantages with this approach. For example, if the excess is small, a relatively high capacity link and interface that are devoted to the excess traffic are underutilized. This is wasteful of valuable network resources and expensive for the service provider. Furthermore, it is often the case that all ACs between one pair of CE and PE are not used simultaneously. For example, traffic between offices on the same side of the world peak at local time business hours and may be unused for multiple hours at night. Conversely, traffic with a remote site may be concentrated during two time periods when one office is closing and the other is opening. Thus ACs devoted to this enterprise are not all used at the same time, and network resources devoted to such traffic is underutilized. In such circumstances it is desirable to over-subscribe the link between a CE and PE, i.e., to allow a customer or set of customers to subscribe for more ACs than can be simultaneously carried by one or more physical links.

In one approach, certain ACs are provisioned for certain times of day. A problem with this approach is that traffic is not completely predictable. Thus it is desirable to provision the ACs on demand. A problem with provisioning ACs on demand with current provisioning techniques is that those techniques are manual, slow and error-prone and are not likely to reliably and timely respond to AC configuration and VPN provisioning demands.

EP 0996255 discloses frame relay network that has a network management system in combination with frame relay nodes. The network management system provides frame relay oversubscription trunk and connection parameter signals to the frame relay nodes. The network management system uses a graphical user software interface program for receiving frame relay oversubscription trunk and connection parameters from a network supervisor that are formatted into the frame relay oversubscription trunk and connection parameter signals. The frame relay nodes respond to the frame relay oversubscription trunk and connection parameter signals, for providing an frame relay oversubscription connection control signal from one frame relay node to another frame relay node depending on the frame relay oversubscription trunk and connection parameter signals. EP1069801 discloses a connection bandwidth management process and system for use in a high speed packet switching network. The network comprises a plurality of switching nodes interconnected through a plurality of communication links. Each of the switching nodes comprises means for switching packets from at least one input link to at least one output link. Each of the output links are coupled to at least one buffer in the switching node for queuing packets before they are transmitted over the output link. Each of the communication links supports the traffic of a plurality of user connections statistically multiplexed over the link. Each user connection is allocated an initial agreed-upon bandwidth through the network, with each of the communication links being possibly oversubscribed. EP 1458134 discloses network management procedures that apply measurements of traffic load to achieve greater efficiency in the operation of the network. In a method for deciding whether to route an incoming call on a selected potential service route, the potential service route is treated preferentially if each of its links has available capacity that is more than sufficient by a specified margin. In a method for computing billing revenues, the non-compliance of the network service provider with contracted requirements for carried load causes a revenue penalty to be exacted for lost bandwidth.

Based on the foregoing description, there is a clear need for techniques to provision on demand more VPNs on a provider's network edge node than can be carried simultaneously by one link between the customer equipment and provider edge without the deficiencies of prior art approaches. In particular, there is a clear need for techniques to provision on demand automatically, i.e., without human intervention, more ACs on one link than that link can simultaneously support.

### BRIEF DESCRIPTION OF THE DRAWINGS

The present invention is illustrated by way of example, and not by way of limitation, in the figures of the accompanying drawings and in which like reference numerals refer to similar elements and in which:

FIG. 1A is a block diagram that illustrates a virtual private network on a provider packet-switched network for a virtual private wire service, according to an embodiment;

FIG. 1B is a block diagram that illustrates a virtual private network on a provider packet-switched network for a virtual private LAN service, according to an embodiment;

FIG. 2A is a flow diagram that illustrates at a high level a method for using a sign of death (SOD) on a customer attachment circuit at an edge node of a provider network, according to an embodiment;

FIG. 2B is a flow diagram that illustrates steps of the method of FIG. 2A for detecting a sign of death in more detail, according to an embodiment;

FIG. 3A is a block diagram that illustrates a customer interface record of configuration data, according to an embodiment;

FIG. 3B is a block diagram that illustrates a VPN record of configuration data, according to an embodiment;

FIG. 3C is a block diagram that illustrates a pseudo wire record of configuration data, according to an embodiment;

FIG. 3D is a block diagram that illustrates a combined VPN record on a provisioning server, according to an embodiment;

FIG. 4 is a block diagram that illustrates a computer system upon which an embodiment of the invention may be implemented;

FIG. 5 is a flow diagram that illustrates at a high level a method for provisioning a virtual private network at a server distinct from a provider edge node, according to an embodiment;

FIG. 6 is a flow diagram that illustrates at a high level a method for provisioning a virtual private network at a provider edge node, according to an embodiment;

FIG. 7 is a flow diagram that illustrates at a high level a method for provisioning a virtual private network at a subscription server distinct from a provider edge node, according to an embodiment;

FIG. 8 is a flow diagram that illustrates at a high level a method for provisioning a virtual private network at a provider edge node, according to an embodiment;

FIG. 9A is a block diagram that illustrates a virtual private network on a provider packet-switched network for a virtual private wire service, according to an embodiment with a subscription server;

FIG. 9B is a block diagram that illustrates a virtual private network on a provider packet-switched network for a virtual private LAN service, according to an embodiment with a subscription server;

FIG. 10A is a flow diagram that illustrates steps of the method of FIG. 2A for detecting a first sign of life (FSOL) in more detail, according to an embodiment;

FIG. 10B is a flow diagram that illustrates a step of the method of FIG. 2A for responding to a FSOL based on configuration data in more detail, according to an embodiment;

FIG. 10C is a flow diagram that illustrates a step of the method of FIG. 10A for obtaining configuration data for a physical port in more detail, according to an embodiment; and

FIG. 10D is a flow diagram that illustrates a step of the method of FIG. 10A for obtaining configuration data for a virtual circuit in more detail, according to an embodiment.

### DETAILED DESCRIPTION

A method and apparatus are described for provisioning attachment circuits on network interfaces of edge nodes for virtual private networks. In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention.

Certain embodiments of the invention are described in the context of a single server on a host of a provider network away from the provider edge, which provisions a single, layer-two virtual private network (VPN) on an Internet Protocol (IP) infrastructure for a single customer; but the invention is not limited to this context. In other embodiments, fewer or more servers on hosts at or away from the provider edge provision one or more layer-two VPNs for one or more customers using one or more protocols on a packet switching network based on one or more protocols above layer 2, such as IP and multi-protocol layer switching (MPLS) protocol. In some embodiments, the provider edge nodes are already configured to provision the VPN and do not perform further provisioning; but, instead, respond to a SOD on an attachment circuit for other purposes, such as fault detection and billing.

The client-server model of computer process interaction is widely known and used in commerce. According to the client-server model, a client process sends a message including a request to a server process, and the server process responds by providing a service. The server process may also return a message with a response to the client process. Often the client process and server process execute on different computer devices, called hosts, and communicate via a network using one or more protocols for network communications. The term "server" is conventionally used to refer to the process that provides the service, or the host computer on which the process operates. Similarly, the term "client" is conventionally used to refer to the process that makes the request, or the host computer on which the process operates. As used herein, the terms "client" and "server" refer to the processes, rather than the host computers, unless otherwise clear from the context. In addition, the process performed by a server can be broken up to run as multiple servers on multiple hosts (sometimes called tiers) for reasons that include reliability, scalability, and redundancy, but not limited to those reasons.

### 1.0 EXAMPLE VIRTUAL PRIVATE NETWORK

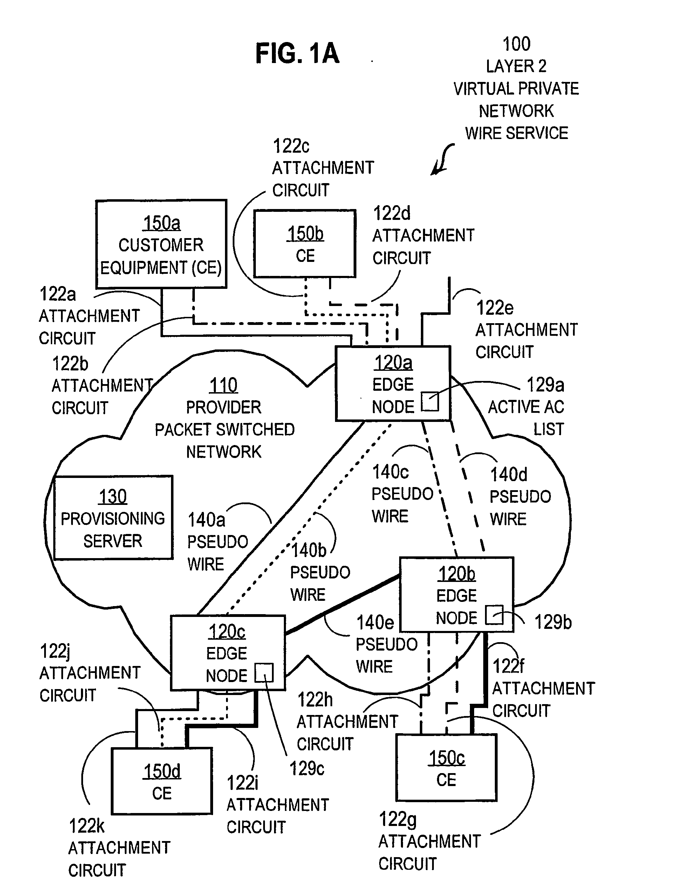

FIG. 1A is a block diagram that illustrates a virtual private network 100 based on a virtual private wire service (VPWS) on a provider packet-switched network (PSN) 110, according to an embodiment. The provider PSN 110 includes two or more edge nodes, e.g., PE 120a, 120b, 120c (collectively referenced hereinafter as PE 120). Each PE 120 includes one or more physical interfaces to which customer premises equipment (CE) may be connected. The physical interfaces support one or more physical or logical attachment circuits (ACs) used by the customer to communicate over network 110. For example, PE 120a includes ACs 122a, 122b, 122c, 122d, 122e. CE 150a is connected to PE 120a through ACs 122a, 122b; and CE 150b is connected to PE 120a through ACs 122c, 122d. AC 122e is available for connecting to CE, but no CE is currently connected. Similarly, CE 150c is connected to PE 120b through ACs 122f, 122g, 122h. CE 150d is connected to PE 120c through ACs 122i, 122j, 122k. The CEs 150a, 150b, 150c, 150d are collectively referenced hereinafter as CEs 150. The ACs 122a, 122b, 122c, 122d, 122e, 122f, 122g, 122h, 122i, 122j, 122k are collectively referenced hereinafter as ACs 122. Also shown is provisioning server 130 on PSN 110.

VPN 100 includes multiple persistent tunnels between pairs of PEs. Each such tunnel is called a virtual circuit or pseudo wire (PW). FIG. 1A depicts five PWs, 140a, 140b, 140c, 140d, 140e (collectively referenced hereinafter as PWs 140) used to provide VPWS for point to point traffic among CEs 150. Point-to-point data packet traffic between CE 150a and CE 150d is carried by AC 122a and PW 140a and AC 122k. Point-to-point data packet traffic between CE 150b and CE 150d is carried by AC 122c and PW 140b and AC 122j. Similarly, point-to-point data packet traffic between CE 150a and CE 150c is carried by AC 122b and PW 140c and AC 122h; and such data packet traffic between CE 150b and CE 150c is carried by AC 122d and PW 140d and AC 122g. Point-to-point data packet traffic between CE 150c and CE 150d is carried by AC 122f and PW 140e and AC 122i. In some embodiments, one or more ACs 122 are logical ACs that share the same physical wire; e.g., ACs 122a, 122b are logical ACs that share the same physical transmission medium from edge node 120a to CE 150a. For example, FR, ATM and Ethernet virtual local area networks (VLANs) are attachment circuits which allow multiple customers (or services) to be transported on the same physical wire.

This complete collection of PWs in FIG.1A is called a full mesh. In some circumstances, such a full mesh involves more PWs and associated costs than are needed. For example, if customer needs are satisfied so long as CE 150d has a PW to CE 150b and CE 150c has a PW to CE 150a, then only two PWs are needed, e.g., 140a and 140c, with fewer associated attachment circuits including only 122j, 122c and 122h, 122b.

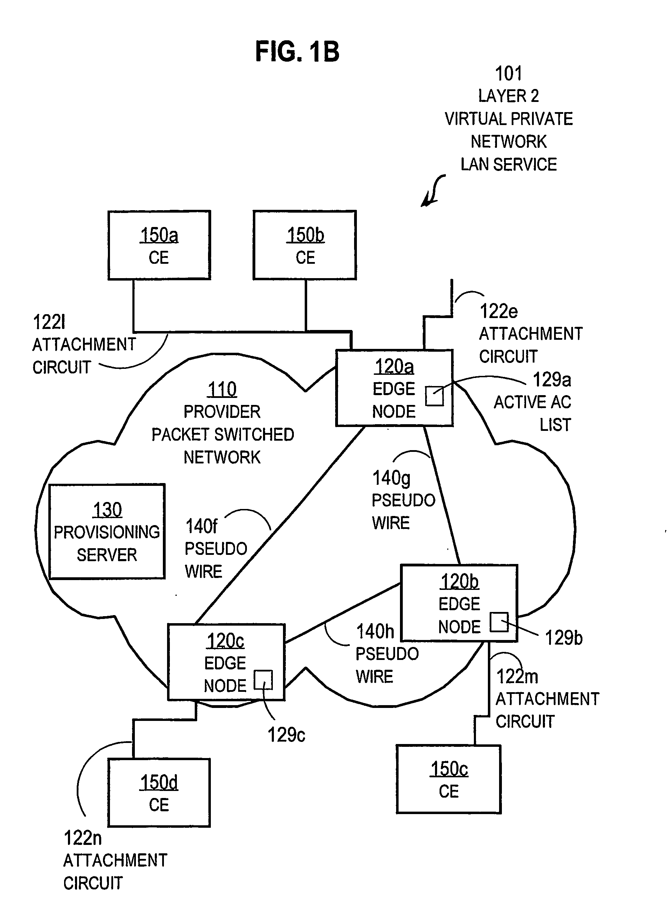

In some VPN service, called a virtual private local-area network (LAN) service (VPLS) every CE is connected to every other CE on the VPN and data traffic flows to them all as if on an Ethernet LAN. FIG. 1B is a block diagram that illustrates a virtual private network 101 on a provider packet-switched network 110 for VPLS, according to an embodiment. For example, VPN 101 includes sufficient PWs 140f, 140g, 140h to connect each PE 120a, 120b, 120c to the others. Traffic between different CEs on the VLAN is not distinguished by separate ACs and separate PWs. Thus, CEs 150a, 150b are on the same LAN, which forms AC 122ℓ, and traffic from both is carried to CE 150c via a single PW 140g to PE 120b and thence via a single AC 122m. Similarly traffic from both is carried to CE 150d via a single PW 140f to PE 120c and thence via a single AC 122n. Inactive AC 122e is kept separate for use in a different VPLS or VPWS VPN. Clearly, the provisioning of PSN 110 is different for the different VPNs 100 and 101, even though both involve the same PEs and CEs.

According to some embodiments of the invention, described in more detail below, each PE 120 includes a list of active ACs. As shown in FIG. 1A and FIG. 1B, PE 120a includes active AC list 129a, PE 120ba includes active AC list 129b, and PE 120c includes active AC list 129c. Hereinafter, active AC lists 129a, 129b, 129c are collectively referenced as active AC list 129.

### 2.0 METHOD AT PROVIDER EDGE NODE FOR USING SOD

According to various embodiments of the invention, one or more provider edge nodes on the provider network detect and respond to a first sign of life (FSOL) or a sign of death (SOD) on an attachment circuit (AC), or both, without human intervention. A SOD is any indication that communications on a physical or virtual attachment circuit are terminated.

In various embodiments, a SOD on an AC is used to aid in fault detection, billing and accounting, and forming logs of usage, among other uses. In the illustrated embodiments, the SOD on an AC is used to free network resources devoted to the dead AC. In many of these embodiments, the automatic SOD detection is paired with an automatic first sign of life (FSOL) detection to automatically provision and release network resources for layer 2 VPNs. The automatic provisioning and release allows provider equipment in some embodiment to be over-subscribed; i.e., to support more VPNs (and accompanying ACs) over a usage cycle than can be supported simultaneously.

The configuration data for the over-subscribed attachment circuits may be stored either locally on each edge node or remotely, such as at a central cluster of one or more servers from which the configuration data is sent as needed. In the illustrated embodiments, the edge node requests the configuration data from the central cluster upon detecting the FSOL for an attachment circuit. The central server and its functions are described in more detail in later sections as described in Booth I, Booth II, and Booth III, cited above.

For example, according to some embodiments, provisioning server 130 stores configuration data for more attachment circuits than can be supported simultaneously at an edge node. For example, provisioning server 130 stores configuration data for five ACs 122a through 122e even though the resources at edge node 120a can only support three of them at a time. This might be the case for any number of commercially viable reasons. It is assumed for purposes of illustration that, in VPN 100, CE 150a and 150b are located in New York City, while CE 150c is in London and CE 150d is in Tokyo. In this circumstance AC 122a switched to PW 140a to Tokyo is not likely used at the same time as AC 122b switched to PW 140c to London. Thus edge node 120a can support AC 122a and 122c during hours when NYC traffic is primarily with Tokyo (e.g., about 3 PM to 3 AM Eastern US Time) and can remove those ACs and support ACs 122b and 122d during hours when NYC traffic is primarily with London (e.g., about 3 AM to 3 PM Eastern US Time).

When a new CE (not shown) or service is connected to unused AC 122e, the provider edge node (e.g., 120a) detects a FSOL and sends a request to provisioning server 130 to obtain configuration data. Provisioning server 130 sends the configuration data to PE 120a and causes new PWs (not shown) to be formed with PE 120b or PE 120c or both. Similarly, provisioning server 130 sends configuration data to PEs 120b, 120c that cause those PEs to switch the new PWs with new ACs (not shown) on PEs 120b, 120c, when those new ACs show FSOL. Thus provisioning server 130 provisions VPN 100 without human intervention based on FSOL on attachment circuits. If AC 122e joins VPN 101, instead of joining VPN 100, then provisioning server 130 causes PE 120a to merge AC 122e with LAN AC 122ℓ, and sends traffic from AC 122e over both extant PWs 140f, 140g. The use of the FSOL is described in more detail in a later section as described in *Booth IV,* cited above.

Similarly, when an AC revives, e.g., when AC 122a becomes active at about 5 PM Eastern US time for communications with Tokyo, the provider edge node 120a detects a FSOL and sends a request to provisioning server 130 to obtain configuration data. Provisioning server 130 sends the configuration data to PE 120a and causes PW 140a to be re-formed with PE 120c and attachment circuit 122k to CE 150d in Tokyo.

### 2.1 METHOD FOR USING A SIGN OF DEATH (SOD)

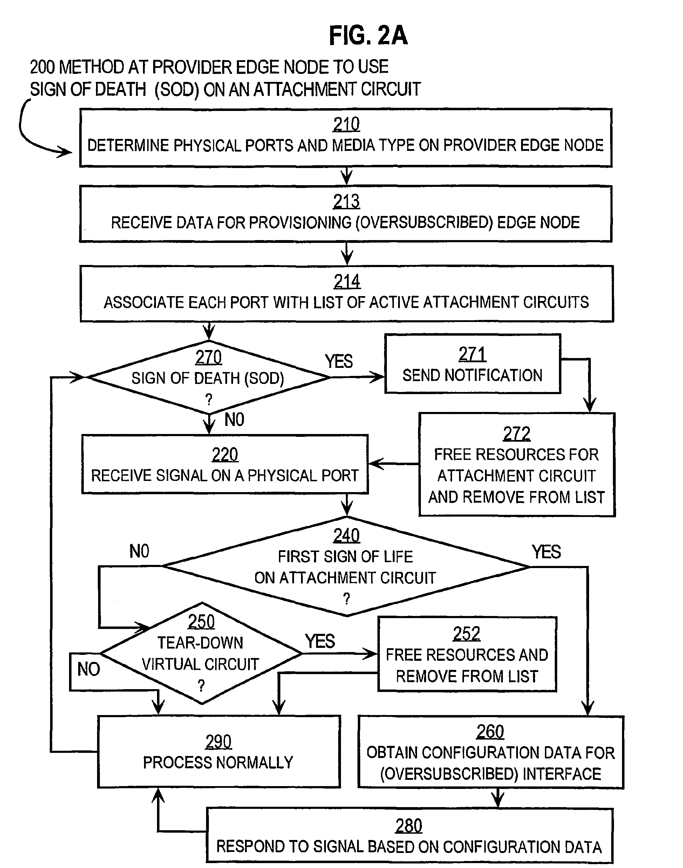

FIG. 2A is a flow diagram that illustrates at a high level a method 200 for using a sign of death (SOD) on a customer attachment circuit at an edge node of a provider network, according to an embodiment. Although steps are shown in FIG. 2A and subsequent flow diagrams in a particular order for purposes of illustration, in other embodiments one or more steps may be performed in a different order or overlapping in time or omitted, or changed in some combination of ways.

In step 210, the provider edge node (e.g., PE 120a) determines physical ports and media types that are directed to customer equipment. Any method may be used to determine this list.

It is assumed for purposes of illustration that PE 120a has 24 physical ports for linking to customer equipment, 16 physical ports are Fast Ethernet (e.g., 4 ports of 100Base-T2 and 12 ports of 100Base-T4), 4 physical ports are ATM ports, and 4 physical ports are Frame Relay ports. It is further assumed that PE 120a has two other physical ports connected to other nodes in the provider network 110 (e.g., 2 physical ports that are Gigabyte Ethernet). In step 210, for example when PE 120a powers up, PE 120a builds a data structure that indicates identifiers for itself, its connections to other nodes in the provider network, and its interfaces to customer equipment. Example information for such a data structure is listed in Table 1.

**Table 1. Example physical ports and media types for PE 120a.**

| **Physical port IDs** | **media type** | **Facing** |
|---|---|---|
| 0 | null | self |
| 1 to 2 | Gigabyte Ethernet | provider network |
| 3 to 6 | Fast Ethernet (100Base-T2) | customer |
| 7 to 18 | Fast Ethernet (100Base-T4) | customer |
| 19 to 22 | ATM | customer |
| 23-26 | Frame Relay | customer |

Any method may be used to receive this data. In some embodiments, the information is input manually by a network administrator and stored locally or on a remote node. In some embodiments, some of the information is stored locally on the device by the original equipment manufacturer (OEM). In some embodiments, the data is retrieved from storage locally (e.g., from a read only memory, ROM) or remotely. In some embodiments, the data is sent in a message from another node on the network either in response to a message from the node requesting the data or in an unsolicited message. In some embodiments a combination of different methods is used.

In step 213, data is received for provisioning the edge node network interfaces. In the illustrated embodiment, the data indicates a provisioning server, e.g., server 130, which provides configuration data on request, as described below and in *Booth IV.* In other embodiments, the data received in step 213 is some or all of the configuration data for one or more interfaces to switch one or more attachment circuits to one or more pseudo wires to form one or more VPNs. In the illustrated embodiment, the provisioning server holds configuration data for an over-subscribed network node with at least one over-subscribed interface. In other embodiments, the network 110 is over-subscribed rather than the individual edge node or interface. In some embodiment, none of the network equipment is over-subscribed by the provisioning data. Any method may be used to receive this information, as described above for step 210. In some embodiments, the configuration data for provisioning a VPN is pushed to one or more provider edge nodes during step 213. In some embodiments, the configuration data is pushed or pulled as needed (in step 260, described below) and step 213 is omitted.

In step 214, each customer-facing physical port is associated with a list of active attachment circuits, such as active AC list 129. A list structure is preferred, because some physical ports may be used for multiple virtual circuits; but in other embodiments, other data structures may be used. Initially, for example when PE 120a powers up, the list 129a is likely to be empty with no active attachment circuits. Any method may be used to associate each customer-facing port with a list of active attachment ports. For example, a data structure is formed on PE 120a as list 129a. List 129a has a physical port ID and a link list with no entries, as shown in Table 2, below, for some customer-facing ports. In some embodiments, a single list of active attachment circuits is maintained for a provider edge node, and the physical port associated with each entry is indicated by the name for the attachment circuit. There may be local configuration data for this, essentially containing an identifier (ID) for each physical or logical interface configured, based on configuration data received. In some embodiments, there is automatic generation of an ID based on some algorithm, basically allowing any packet to arrive, deducing the logical port from the arriving packet, and generating an ID automatically. The provisioning server (or the person who provides data for the provisioning server), uses the same algorithm for determining the attachment circuit ID. In various embodiments, the ID is based on the platform, line-cards, or other hardware information, or requested and returned in messages, such as messages formatted according to the simple network management protocol (SNMP).

**Table 2. Example initial associations between ports and active attachment circuits.**

| Physical port ID | List of active attachment circuits |
|---|---|
| 3 | Null |
| 4 | Null |
| 5 | Null |
| ... | Null |

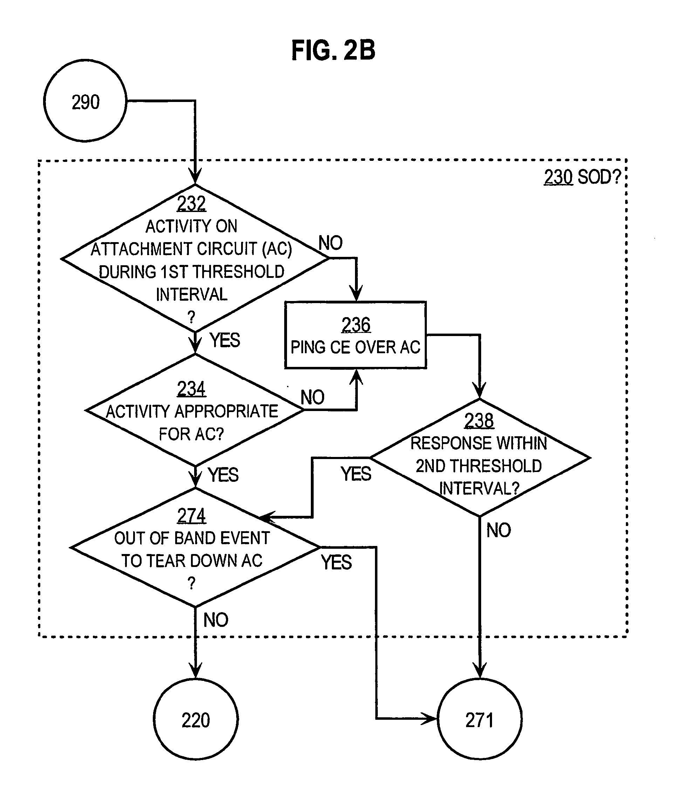

In step 270, it is determined whether there is a sign of death (SOD) for a logical or physical attachment circuit. Step 270 is described in more detail below with reference to FIG. 2B. If a SOD is determined for an attachment circuit, control passes to steps 271, 272 described below. If a SOD is not determined on an attachment circuit, control passes to step 220. Steps 220 and following are described next to indicate how active attachment circuits are associated with physical interfaces (i.e., physical ports).

In step 220, a signal is received on a physical port facing customer equipment. For purposes of illustration it is assumed that a signal is received on physical port # 4 that comprises multiple changes in a physical phenomenon, such as an electric voltage or an optical wavelength.

In step 240, it is determined whether the signal is a first sign of life (FSOL) for an attachment circuit for that port, as described below and in *Booth IV.* In general, any Operations and Management (OAM) signaling used for setup, maintenance, troubleshooting, or tear-down of a circuit may be used to detect a first sign of life (FSOL).

If the signal is not FSOL for an attachment circuit, control passes to step 250. In step 250, it is determined whether the signal is a control plane signal to tear down a virtual circuit. If so, control passes to step 252 in which the virtual circuit is removed from the list of active attachment circuits. In some embodiments, a positive signal that indicates a virtual circuit is to be torn down is considered a sign of death, but is handled in step 250 not in step 270. In some embodiments a positive signal that indicates a virtual circuit is to be torn down is considered a sign of death and is handled in step 270; so steps 250 and 252 are omitted.

Control then passes to step 290 to process the signal normally. For example, after one or more attachment circuits have been active on the edge node, a data packet associated with one of those attachment circuits is processed in step 290. In step 290, a signal is processed according to any manner known in the art at the time the method 200 is implemented. For example, a data packet of multiple bits is examined and found to be in error or is forwarded according to a routing table. Control then passes back to step 270 to again determine whether there is a sign of death on an attachment circuit.

If it is determined in step 240 that the received signal is a FSOL, control passes to step 260 to obtain configuration data for an attachment circuit associated with the signal. For example, as described in more detail below and in *Booth IV,* a signal received on a customer-facing physical port with a null list of active attachment circuits is determined to be a FSOL; and control passes to step 260. In some embodiments, the signal includes data used to identify an attachment circuit. In some embodiments, the physical port ID is used to identify an attachment circuit. In some embodiments the configuration data includes data that indicates a VPN associated with the attachment circuit. In some embodiments the configuration data involves more resources than can be supported simultaneously and the interface (or other provider network resource) is over-subscribed.

Any method may be used to obtain the configuration data, as described above for receiving data indicating the physical ports and the provisioning server, in steps 210 and 213, respectively. More details on step 260 are described below as in Booth *IV.*

In step 280, the provider edge node responds to the FSOL signal based on the configuration data. In some embodiments, step 280 includes configuring the attachment circuit on the provider edge node, for example to be switched to a particular VPN. In some embodiments, step 280 includes sending a message to a customer if the signal received on the physical port is not consistent with any service subscribed to by the customer, as defined by the configuration data. In some embodiments in which the attachment circuit is already configured, step 280 determines that no special action is called for and simply passes the signal on to step 290 for normal processing. In an illustrated embodiment, when consistent configuration data is found for the signal, an identifier for the attachment circuit is added to the list of attachment circuits associated with the physical port. Step 280 is described in more detail below as in *Booth IV.*

To better illustrate the use of SOD by an edge node, it is assumed that several attachment circuits are formed on the edge node interfaces as a result of FSOL signals received and processed in steps 220 through 280. Table 3 shows, for purposes of illustration, the assumed contents of an example active AC list on edge node 120a after repeated operation of steps 220 through 280. The AC identifiers (AC IDs) used in Table 3 are described in more detail in the following section. Note that the attachment circuits on Ethernet physical port 4 are virtual local area networks (VLANs) with numerical tags; that the attachment circuit on ATM port 20 is a virtual circuit identified by a virtual path identifier (VPI) that indicates a group of virtual circuits, and a two-octet virtual channel identifier (VCI); and that the attachment circuit on FR port 25 is a virtual circuit identified by a data-link connection identifier (DLCI).

**Table 3. Example associations between ports and active attachment circuits.**

| Physical port ID | List of active attachment circuits |
|---|---|
| 3 | null |
| 4 | VLAN 17 |
| 5 | null |
| ... | null |
| 20 | ATM VPI = 128/VCI = 55 |
| ... | null |
| 25 | FR DLCI 11 |
| ... | null |

The SOD is expected to be different on different physical interfaces and for different protocols. More details on determining the SOD in step 270 are described in a later section.

If it is determined in step 270, that a sign of death (SOD) is indicated on an attachment circuit, control passes to step 271. For purposes of illustration, it is assumed that a SOD is indicated on FR interface 25. Control passes to step 271.

In step 271, notification is sent over the provider network 110 to some server. For example, in some embodiments, a SOD is an indication of a fault in the system, such as a short or breakage in cabling between provider edge node (e.g., 120a) and customer equipment (e.g., 150a). In some such embodiments, the SOD is reported to a network service administrator to determine remedial action. In some embodiments, a SOD is a sign of end of a service for which the customer is being billed. In some such embodiments, the SOD is reported to a billing or accounting server. In some embodiments, a SOD is a sign of an end to usage of network resources and the usage cessation is logged. In some such embodiments, the SOD is reported to a usage logging server.

In some embodiments, step 271 is omitted. For example, in some embodiments that over-subscribe attachment circuits on edge node interfaces facing customer equipment, a dead attachment circuit is an opportunity to revive another attachment circuit and not a cause for notification, and step 271 is omitted. For example, a dead attachment circuit for a pseudo wire to Tokyo is an opportunity to revive a pseudo wire to London on the FSOL of that attachment circuit, and step 271 is omitted. For purposes of illustration, it is assumed that FR DLCI 11 is AC 122a that switches to PW 140a to edge node 120c in Tokyo, and therefore its SOD is an opportunity to revive AC 122b for London traffic.

In step 272, resources associated with the attachment circuit are freed, and the attachment circuit is removed from the list of active attachment circuits. For example, bandwidth on the interface with the customer equipment is freed for use with another attachment circuit. Table 4 shows, for purposes of illustration, the assumed contents of an example active AC list on edge node 120a after operation of step 272, after a SOD is detected for FR DCLI 11 on physical port 25. **Table 4. Example associations between ports and active attachment circuits after SOD.**

| Physical port ID | List of active attachment circuits |
|---|---|
| 3 | null |
| 4 | VLAN 17 |
| 5 | null |
| ... | null |
| 20 | ATM VPI = 128 / VCI = 55 |
| ... | Null |
| 25 | null |
| ... | Null |

In some embodiments, a pseudo-wire associated with a dead attachment circuit is either actively torn down, or passively not kept alive, during step 272. Thus pseudo-wire signaling is also a freed network resource. In the illustrated example, a SOD on AC 122a causes the provider network 110 to refrain from keeping alive PW 140a. The reduction of pseudo-wire signaling is an important advantage for equipment which terminates a large number of pseudo-wires into virtual interfaces (e.g., layer 2 to layer 3 "L2-L3"equipment or L2TP Network Server "LNS" equipment). These embodiments allow equipment which can service large numbers of pseudo-wires (potentially hundreds of thousands) with very few interfaces, and within a small footprint. In such embodiments, a great deal of the scaling limitation is not interface density, but the ability to service the signaling and virtual interfaces associated with the resulting large number of pseudo-wires. Reducing the existence of such signaling for pseudo-wires of "dead" attachment circuits provides a considerable scaling benefit.

Using method 200, a provider edge node (e.g., 120a) can respond dynamically, without human intervention, to signals received from customer equipment on any physical port (e.g., 122e) to automatically configure one or more attachment circuits, such as to join one or more VPNs, to automatically delete the attachment circuit upon a SOD and free the network resources used by that attachment circuit, including freeing the resources consumed by one or more pseudo-wires in some embodiments. Thus method 200 allows provider network resources to be over-subscribed.

Although the method is illustrated for a very few attachment circuits, it is often difficult to predict the performance of so few attachment circuits and therefore it is often imprudent to over-subscribe a network interface with so few attachment circuits. However, as the number of attachment circuits grows, the percentage of under-utilized resources becomes more predictable, and it becomes more prudent to over-subscribe the edge node resources.. Such large number over-subscription allows, for example, allocation of more than 4096 VLANs on a given Ethernet interface (even though 4096 is the maximum number VLANs allowed in a single 802.1Q tag). To utilize such a capability, the VLAN IDs are dynamically allocated to attachment circuits in some embodiments. Similarly, in some embodiments, limited segmentation and reassembly (SAR) capabilities are dynamically managed over an ATM interface. SAR is a limited resource on an interface. Assigning those resources interfaces only for "alive" circuits minimizes an "out of resource" condition. Similarly, VLANs are limited resources on Ethernet switches (typically at the box level). At the most generic level, any limited resource that is necessary on a per-circuit basis can be better managed if a management function can determine whether that circuit is being used or not. Thus the SOD coupled with the FSOL is used to determine which circuits are being used.

### 2.2 METHOD FOR OBTAINING CONFIGURATION DATA

As described above, configuration data is obtained in step 260. Any method may be used to obtain the configuration data. In some embodiments, configuration data for attachment circuits already reside on the provider edge node (e.g., 120a). In the illustrated embodiments, the configuration data is obtained by sending a request for configuration data to a provisioning server (e.g., provisioning server 130) on the provider network.

Often, the configuration data is derived based on customer specifications for the topology for the VPN and level of service -- information that is received when the customer subscribes to the service. For example, configuration data is received and stored at provisioning server 130 that indicates for VPN 100 the service is VPWS; the attachment circuits 122 are frame relay virtual circuits, each identified by a data link connection identifier (DLCI); the participating edge nodes are PEs 120a, 120b, 120c; and PWs 140a, 140b, 140c, 140d, 140e have a certain level of service, e.g., a certain value for a per-hop behavior (PHB) parameter. The use of PHB to indicate level of service is described in RFC 3140 entitled "Per Hop Behavior Identification Codes," by D. Black, S. Brim, B. Carpenter, F. Le Faucheur (June 2001).

In an alternative example, configuration data is received and stored at provisioning server 130 that indicates for VPN 100 the service is VPWS; the attachment circuits 122b, 122c, 122h, 122j are ATM virtual circuits; the participating edge nodes 120 are PEs 120a, 120b, 120c; with connecting pseudo wires PW 140b and PW 140c that are built on MPLS and have a level of service indicated by a value of an MPLS experimental (EXP) parameter. The use of EXP to indicate level of service is described in RFC 3032 entitled "MPLS Label Stack Encoding" by E. Rosen, D. Tappan, G. Fedorkow, Y. Rekhter, D. Farinacci, T. Li, A. Conta, (January 2001). RFC 3032 and RFC 3140 are implementations of Differentiated Services Code Point (DSCP) described in RFC 2474 entitled "Definition of the Differentiated Services Field (DS Field) in the IPv4 and IPv6 Headers," by K. Nichols, S. Blake, F. Baker, D. Black (December 1998).

For example, configuration data is received and stored at provisioning server 130 that indicates for VPN 101 the service is VPLS; the attachment circuits 122 are Ethernet virtual local area networks (VLANs), each identified by a VLAN tag in the Ethernet header; the participating edge nodes are PEs 120a, 120b, 120c; and PWs 140f, 140g, 140h have a certain level of service, e.g., a certain value for a per-hop behavior (PHB) parameter.

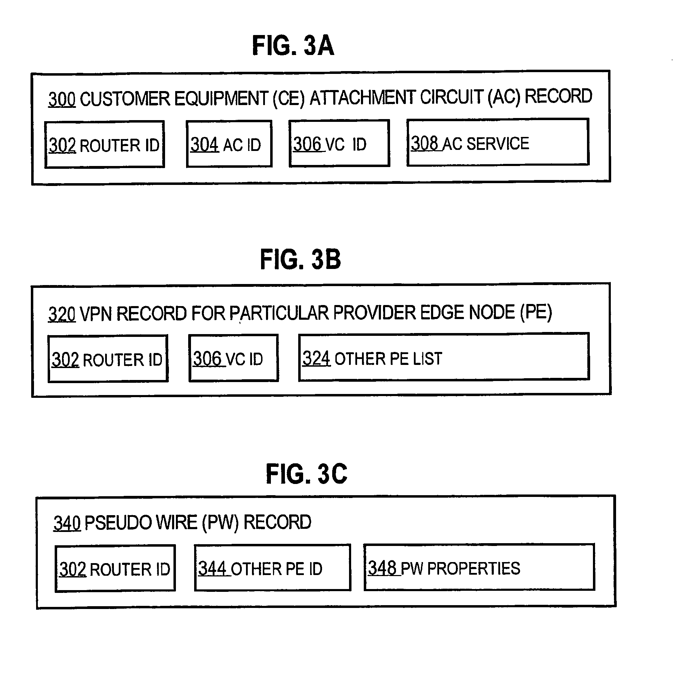

Example data structures for storing configuration data locally on the provider edge node or on a provisioning server, such as a Remote Authentication Dial-In User Service (RADIUS) server are illustrated in FIGs. 3A, 3B, and 3C. Some or all of these data structures may be used in other embodiments of provisioning server 130 that do not use the RADIUS protocol. FIG. 3A is a block diagram that illustrates a customer interface record 300, according to an embodiment. In the illustrated embodiment, the record 300 includes four fields, a router identification (Router ID) field 302, an attachment circuit identification (AC ID) field 304, a network virtual circuit (VC) identification (VC ID) field 306, and an attachment circuit (AC) service field 308.

The Router ID field 302 holds data that uniquely indicates a provider edge node that is to receive the configuration data. In the illustrated embodiment, this provider edge node sends a RADIUS authorization request to the provisioning server. The value of the Router ID field 302 serves as an index to a particular record in the data stored on the RADIUS server. In an illustrated embodiment, the value of the Router ID field is the IP address of the provider edge node on the provider network. An IP address is four octets that are commonly designated by four decimal values separate by three dots, where each decimal value falls between 0 and 255, inclusive. An advantage of this embodiment is that the IP address of the requesting edge node is included in the header of an IP data packet carrying the request and is automatically used by the provisioning server to find the appropriate record to use in a response. For purposes of illustration, it is assumed that PEs 120a, 120b, 120c have IP addresses 1.1.1.1, 1.1.1.2 and 1.1.1.3, respectively. For some embodiments with locally stored configuration data, the router ID field 302 is omitted.

In some embodiments, the Router ID field 302 holds the IP address of the provider edge node (e.g., PE120a) to be configured. In some embodiments, the Router ID field holds other data, such as text, that uniquely identifies the provider edge node (e.g., PE 120a) in the provider network.

The AC ID field 304 holds data that indicates a physical or logical attachment circuit on a provider edge node that is a member of a VPN. The value of the AC ID field 304 serves as a secondary index to a particular record in the configuration data stored on the provisioning server (e.g., server 130). The AC ID field serves as the primary index to a particular record in the configuration data stored locally. Any method may be used to indicate the attachment circuit. In one embodiment, the AC ID field 304 holds data that uniquely indicates physical links on the router identified in Router ID field 302, such as some combination of the physical port ID and a virtual circuit ID. For example, a certain class of routers internally number the physical interfaces on each router from 0 through N, where N is the number of physical interfaces, and 0 refers to the router itself. In some embodiments the physical interfaces are named in software. In some embodiments, the AC is uniquely indicated by an arbitrary value (e.g., a name or number).

In some embodiments, the AC ID is based on a logical attachment circuit, such as a frame relay or ATM virtual circuit name, used on the CE. For example, ATM virtual circuits are identified by an ATM port name, a one-octet virtual path identifier (VPI) that indicates a group of virtual circuits, and a two-octet virtual channel identifier (VCI) in the header of an ATM cell. The VPI/VCI combination is used to identify the next destination of an ATM cell as it passes through a series of ATM switches. In embodiments using the ATM virtual circuit identifier as an arbitrary name for an attachment circuit, the AC ID comprises the ATM port, VPI and VCI. For example, if the ATM port is named "atm1/0" and the VPI is "2" and the VCI is "34," then an appropriate AC ID is "atm1/0.2.34." In the example of Table 1, an ATM port has port ID 20 and an appropriate AC ID is "20.2.34." Since the customer subscribes to the VPN, the customer names for the virtual circuits are appropriate to use as an index into the configuration data stored on the provisioning server.

In some embodiments, the AC ID field 304 holds CE ID data that uniquely identifies a piece of customer premises equipment connected to provider edge equipment. For example, a network access identifier (NAI) or a Domain Name Server (DNS) host name associated with the CE can serve as CE ID data. The use of NAI to indicate a CE is described in RFC 2486 entitled "The Network Access Identifier," by B. Aboba, M. Beadles (January 1999), the entire contents of which are hereby incorporated by reference as if fully set forth herein. The use of DNS to indicate a CE is described in RFC 1101 entitled "DNS encoding of network names and other types," by P.V. Mockapetris (April 1989), the entire contents of which are hereby incorporated by reference as if fully set forth herein. It is assumed for purposes of illustration that CE 150d has an NAI of "providerX/attanta@vpnY.domainZ.net." For VPLS or for a CE with a single attachment circuit to a provider edge node, an AC ID value that is only a CE ID value is sufficient to determine VPN membership. For VPWS and a CE with multiple logical or physical attachment circuits to a provider edge, an AC ID includes both a CE ID along with a customer name for an attachment circuit to determine a unique identifier for an attachment circuit, and thence VPN membership.

In various embodiments, the AC ID field 304 holds either an AC specific identifier or a CE identifier, or both.

The VC ID field 306 holds data that uniquely indicates a particular collection of pseudo wires on the provider network, e.g., network 110. In a VPLS, the VC ID indicates all the pseudo wires in the VPN, e.g., PWs 140f, 140g, 140h in VPN 101. In a VPWS, the VC ID indicates a single pseudo wire that provides point-to-point traffic as part of a particular VPN. In some embodiments, the VC ID field 306 holds data that indicates a VPN-ID as described in RFC2685, the entire contents of which are hereby incorporated by references as if fully set forth herein. In some embodiments the VC ID field 306 holds data that indicates a VPN differently from the VPN-ID as described in RFC2685.

In some embodiments, the VC ID serves as an attachment group identifier (AGI) so that each attachment circuit on a VPN can be uniquely identified within the group identifier using an attachment individual identifier (AII).

The AC Service field 308 holds data that describes the service to be provided to an AC or CE. In some embodiments, the field 308 includes data that indicates the type of VPN service, e.g., whether the VPN service type is VPLS, VPWS, or IP-only LAN-like Service (IPLS) or some other type of service. In some embodiments, the field 308 includes data that indicates attachment circuit specific parameters. Attachment circuit-specific parameter include, but are not limited to: a quality of service level associated with minimum values for bandwidth, and maximum values for latency and jitter; specific values for bandwidth, latency and jitter; an attachment circuit data plane protocol and control plane protocol; authentication credentials; attachment circuit original equipment manufacturer (OEM) addresses, Operations and Management (OAM) signaling; and values for configurable parameters associated with those protocols, such as cell packing for ATM, and maximum transmission unit (MTU) for packet sizes. For purposes of illustration, it is assumed that AC Service field 308 holds data that indicates a service type of VPLS with Ethernet VLAN protocol for both data and control planes on the attachment circuits, and each attachment circuit allowed up to 30% of bandwidth on a physical port.

FIG. 3B is a block diagram that illustrates a VPN record 320 on a provisioning server, according to an embodiment. In the illustrated embodiment, the record 320 includes three fields, a Router ID field 302, VC ID field 306, and an Other PE list field 324.

The Router ID field 302 and VC ID field 306 are as described above for the attachment circuit record 300. The value of the Router ID field 302 serves as a primary index, and the value of the VC ID field serves as a secondary index, to a particular VPN record 320 in the data stored on the provisioning server. The Router ID field 302 is omitted and the VC ID field serves as the primary index to the record 320 in some embodiments in which the configuration data is stored locally.

The Other PE list field 324 holds data that indicates one or more provider edge nodes to which the edge node identified in Router ID field 302 forms pseudo wires to support the VC indicated in the VC ID field 306. For VPWS, the Other PE list 324 includes an identifier for a single PE different than the PE indicated by the Router ID field 302. In the example VPWS, VPN 100, the Other PE list field 324 for the record with Router ID value 1.1.1.1 (PE 120a) and VC ID corresponding to PW 140a holds data that indicates PE 120c, such as its IP address 1.1.1.3. In the same example, the Other PE list field 324 for the record with Router ID value 1.1.1.3 (PE 120c) holds data that indicates PE 120a. For VPLS, the Other PE list 324 includes identifiers for all PEs on the VPN different than the PE indicated by the Router ID field 302. In the example VPLS, VPN 101, the Other PE list field 324 for the record with Router ID value 1.1.1.1 (PE 120a) and VC ID corresponding to VPN 101 with PWs 140f, 140g, 140h, holds data that indicates PE 120b and PE 120c, such as their IP addresses.

FIG. 3C is a block diagram that illustrates a pseudo wire record 340 on a provisioning server, according to an embodiment. In the illustrated embodiment, the record 340 includes three fields, a Router ID field 302, an Other PE ID field 344, and a pseudo wire (PW) properties field 348.

The Router ID field 302 is as described above for both the attachment circuit record 300 and VPN record 320. The Router ID field 302 serves as a primary index to a particular PW record 340 in the data stored on the provisioning server. The Router ID field 302 is omitted in some embodiments in which the configuration data is stored locally.

The Other PE ID field 344 holds data that indicates a target provider edge node for a particular pseudo wire. The Other PE ID field 344 serves as a secondary index to a particular PW record 340 in the data stored on the provisioning server. The Other PE field 344 serves as the primary index to the record 320 in some embodiments in which the configuration data is stored locally. In some embodiments, the,field 344 includes just an identifier for the router. In some embodiments the field 344 includes also an identifier for a particular attachment circuit on the target router.

The PW properties field 348 holds data that indicate one or more properties of the PW that are used to configure a provider edge node to form the PW. For example, in some embodiments, the PW properties field includes data that indicates a control plane protocol (e.g., the Label Distribution Protocol, LDP) for negotiating the PW with the target provider edge node. In some embodiments, the PW properties field includes data that indicates a value of an EXP parameter (e.g., a hexadecimal value "3" designated "0x03") as described in RFC3032, cited above. In some embodiments, the PW properties field 348 includes one or more pairs of attributes and values for PW properties.

An advantage of the data structures described above with reference to FIG. 3A, FIG. 3B and FIG. 3C, is that they allow the hierarchical relationships between attachment circuits, VPN edge node members and pseudo wires to be represented as flat files used by some provisioning servers, such as RADIUS servers. The configuration data stored in these data structures may be sent to a provider edge node in one or multiple different response messages. Another advantage of these data structures are that they are small and thus can be used to send incremental changes in configuration data to provider edge nodes.

In another embodiment, data for two or more of these data structures are combined into the same data structure on the provisioning server. An advantage of combining these data structures is that fewer operations are required on the provisioning server to retrieve the configuration data. Thus the combined data can be returned in one transaction. A disadvantage of combining these data structures is that data not relevant to a particular edge node and attachment circuit is included in a record and retrieved. Thus, either the provisioning server or the receiving provider edge node consumes processing resources to filter out the unwanted information. If the receiving node does the filtering, then extra network resources are consumed to transmit the excess data.

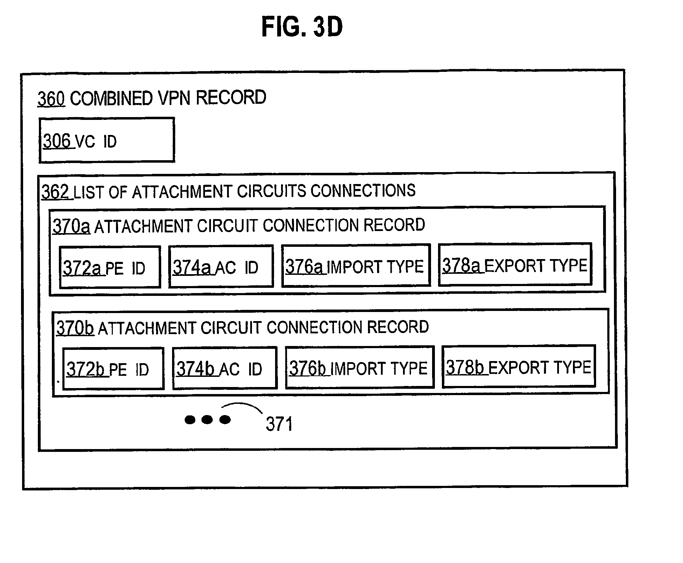

FIG. 3D is a block diagram that illustrates a combined VPN record 360 on a provisioning server, according to an embodiment as described in *Booth I.* In the illustrated embodiment, the record 360 includes a VC ID field 306 and a list 362 of attachment circuit connection records. The VC ID field 306, as described above, holds data that indicates a VPN identifier from a customer's perspective. Thus VC ID field 306 indicates all the pseudo wires in both VPLS and VPWS VPNs. The list 362 of attachment circuit connection records includes attachment circuit connection records 370a, 370b and other attachment circuit connection records indicated by ellipsis 371 (collectively referenced herein as connection records 370).

Each connection record 370 uniquely identifies a source attachment circuit using a PE ID field 372a, 272b (and others, collectively referenced herein as PE ID fields 372) and an AC ID field 374a, 274b (and others, collectively referenced herein as AC ID fields 374). Any method may be used to identify the PE and AC. In some embodiments, the PE ID field 372 holds the RADIUS PE-Router-ID attribute; and the AC ID field 374 holds the RADIUS Attachment-Individual-ID attribute.

Each connection record also includes an import type field 376a, 376b (and others, collectively referenced herein as import type field 376) and an export type field 378a, 378b (and others, collectively referenced herein as export type field 378). The import type field 376 and export type field 378 hold data that indicate to which remote provider edge node a particular attachment circuit should connect when that attachment circuit is the source. The type data in fields 376, 378 indicate that the associated attachment circuit is either a hub or a spoke in the VPN topology. As is well known in the art for BGP, a provider edge node functioning as a hub terminates multiple pseudo wires for a given VPN. For each remote provider edge participating in the VPN, there is exactly one pseudo wire between the hub provider edge and the remote provider edge. A provider edge functioning as a Spoke terminates exactly one pseudo wire to a remote hub provider edge for a given VPN. Import and export roles define whether a provider edge functions as a hub or a spoke and, as such, with what remote provider edges it must establish pseudo wires in order to build the L2VPN. In a hub and spoke environment, there must be only one Hub for any given VPN and the rest of the provider edges must be spokes. In a full-mesh environment, every provider edge operates as a hub.

Referring again to FIG. 2A, in step 260, configuration data is obtained for an attachment circuit. In some embodiments, the configuration data is stored in multiple data records 300, 320, 340 as described above with reference to FIG. 3A, FIG. 3B, FIG. 3C. In an illustrated embodiment, the configuration data is stored on a provisioning server, e.g., provisioning server 130; and step 260 includes sending a request message to the provisioning server for data in one or more of the data records 300, 320, 340 or 360, and receiving configuration data in one or more response messages.

### 2.3 METHOD FOR DETECTING SOD

FIG. 2B is a flow diagram that illustrates step 270 of the method of FIG. 2A for detecting a sign of death (SOD) in more detail, according to an embodiment. Step 230 is a particular embodiment of step 270. After normal processing of received signals in step 290, for example, control passes to step 230. Step 230 includes steps 232, 234, 236, 238, 274. In some embodiments, one or more of these steps are omitted.

In step 232, it is determined whether there is any activity over an attachment circuit during a first threshold interval. The first threshold interval is selected to indicate an attachment circuit that is likely to be unused for an extended period on the order of several times the threshold interval. For example, an attachment circuit that is unused over 30 minutes is expected to remain unused for several hours. Thus, in an illustrated example it is assumed that the first threshold interval is 30 minutes. For example, it is determined during step 232, whether any FR traffic with DCLI "11" is passed through physical port 25 over the last 30 minutes. In various embodiments, packets are examined in a process called "sniffing" for looking for particular values in the header. FR would be DLCI, ATM would be VPI/VCI and/or frame type. Ethernet would be MAC address and/or VLAN(s). In embodiments in which an attachment circuit is a physical port, step 232 does not involve parsing the data to see if it is related to a particular virtual circuit, instead any sequence of physical changes is considered activity. For example, many physical attachment circuits typically express a voltage on a given line. In some embodiments, voltage detected on a line is used to signal "alive" or "dead," or other states.

If it is determined in step 232 that there is any activity on the attachment circuit, the attachment circuit appears to be active and control passes to step 234 to do further assessment. In some embodiments, steps 234 and following steps are omitted, the attachment circuit is determined not to be dead, and control passes directly to step 220.

If it is determined in step 232 that there is not any activity over the attachment circuit during the first threshold interval, then control passes to step 236. In step 236, the attachment circuit is tested by probing the customer equipment over the attachment circuit. For example, a ping message is sent over the attachment circuit to request a response message. Control then passes to step 238 to determine whether the response is received within a second threshold interval.

In step 238, it is determined whether a response to the request message, such as a ping, is received within a second threshold time interval. The second threshold interval is selected to indicate that the customer premises equipment is not responding. The second threshold interval is typically several times the travel time for a signal between the customer premises equipment and the provider edge node, such as one second. A failure to receive a response to a ping message typically indicates a configuration or hardware problem. If a response is not received within the second threshold interval, then the attachment circuit is dead, and control passes to step 271, as shown, to send notification, or step 272 to release network resources. If it is determined in step 238 that the response is received within the second threshold time interval, then it is determined that the attachment circuit is still alive and control passes to step 274.

In some embodiments, steps 236 and 238 are omitted, the attachment circuit is determined to be dead based on the inactivity determined in step 232, and control passes directly to step 271 to send notification, or step 272 to release network resources. For example, in embodiments that over-subscribe a network interface, there is no interest in keeping the attachment circuit alive just because there is no equipment or configuration disruption. The attachment circuit is considered dead if it is not expected to be used for several hours. Thus, in such embodiments, steps 236 and 238 are omitted.

If it is determined in step 232 that there is activity over the attachment circuit within the threshold interval, then control passes to step 234. In step 234 it is determined whether the activity is appropriate for the attachment circuit. For example, it is determined whether the data are consistent with the protocol (e.g., whether a FR header is seen in each FR attachment circuit, or whether a FR DLCI, Ethernet VLAN or ATM VPI/VCI is seen, as appropriate for the circuit type). In some embodiments, during step 234 it is determined whether a protocol specific "keep-alive" message has been received within the proper time frames.

If it is determined in step 234 that the activity is not appropriate for the attachment circuit, control passes to step 236 and 238 to probe the attachment circuit with a ping message. In embodiments that omit steps 236, 238, control passes directly to step 271, as shown, or step 272.

If it is determined in step 234 that the activity is appropriate for the attachment circuit, control passes to step 274. In step 274, it is determined whether an out-of-band event has occurred that indicates the attachment circuit is terminated. An out-of-band event is any event detected at the provider edge node that does not depend on signals received over the attachment circuit. For example, a message from the provisioning server that the configuration for the particular attachment circuit is withdrawn or invalid is an out-of-band event that indicates communications with the attachment circuit are terminated in some embodiments. In some embodiments, a message from a subscription server or authorization, authentication and accounting (AAA) server indicating the attachment circuit is no longer subscribed to, or is associated with a customer not in good standing, is the out-of-band event that indicates communications with the attachment circuit are terminated. In some embodiments, the customer simply indicates that the customer's network is to be reprovisioned for capacity planning (either temporary or permanent)

If it is determined that an out-of-band event has occurred that indicates the attachment circuit is terminated, control passes to step 271, as shown, or step 272, in various embodiments, to respond to a sign of death (SOD). If it is determined that an out-of-band event has not occurred that indicates the attachment circuit is terminated, control passes to step 220 to receive the next signals on the attachment circuit, thus leaving the attachment circuit in place.

In other embodiments, steps 232, 234, 236, 274 are performed in a different order from that shown in step 241, or one or more of these steps are omitted.

### 3.0 CENTRAL SERVER

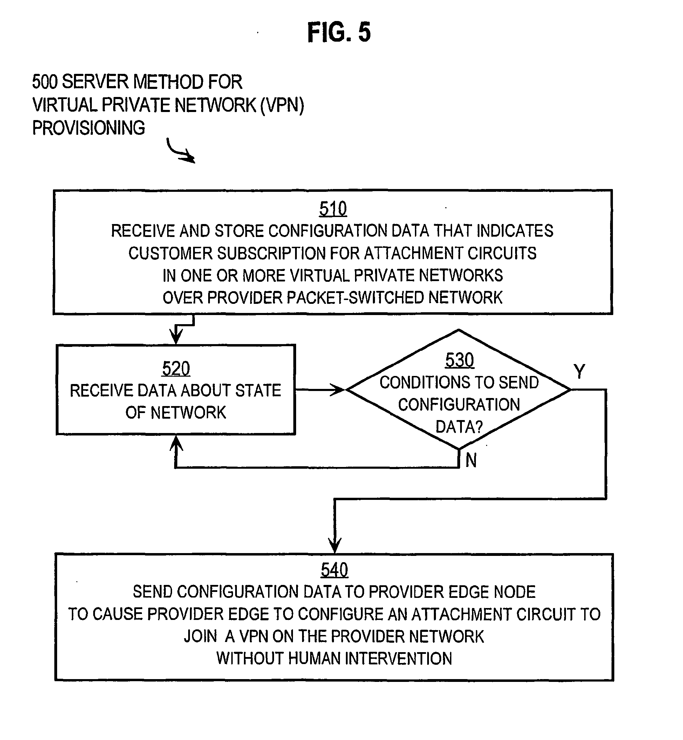

FIG. 5 is a flow diagram that illustrates at a high level a method 500 for provisioning a virtual private network at a server distinct from a provider edge node, according to an embodiment. FIG. 5 is presented as FIG. 2A in *Booth I.*

During step 510, configuration data is received at the server and stored. The configuration data indicates values for one or more parameters relevant to configuring one or more attachment circuits to participate in one or more virtual private networks over the provider packet switched network. Any method may be used to receive this configuration data. In some embodiments, the configuration data is input manually by a network administrator and stored locally or on a remote node. In some embodiments, the data is retrieved from storage locally or remotely. In some embodiments, the data is sent in a message from another node on the network either in response to a message from the peer requesting the data or in an unsolicited message. In some embodiments a combination of different methods is used.

During step 520, data about the state of the network is received. The network state data may be received in any manner, such as described above for the configuration data. For example, in some embodiments, the configuration data indicates that a particular interface is to join a VPN at a particular time, and the state data simply indicates the current time. In some embodiments, the data about the state of the network is received as a message from a provider edge node, e.g., PE 120, that a particular physical or logical interface on that PE 120 has become active. In some embodiments, the server polls one or more nodes on the provider packet-switched network 110 during step 520 to determine the current state of the network. In some embodiments, the state data is received from a human administrator who indicates when one or more interfaces on a PE should be configured.

In step 530, it is determined whether conditions in the network are satisfied to send configuration data to one or more of the provider edge nodes, e.g., PEs 120, based on the data received in step 520. Any conditions may be used to determine when to send the configuration data to the edge nodes. In some embodiments, the current state data is compared against stored state data, and the condition is satisfied when the current state matches the stored state. In some embodiments, the condition is satisfied when a certain message is received from a human administrator, or from a different server, or from a PE 120. For example, in some embodiments, a customer subscribes to a VPN service on the provider's public web site, and the conditions are satisfied when the web site server sends a message to the configuration server 130 to activate the service.

In step 540, the configuration server sends configuration data to the provider edge node so that the provider edge node can configure the customer interface to send data over the VPN without human intervention. Thus a human administrator does not touch the provider edge node at the time it is configured to connect an attachment circuit to a VPN. This is called zero touch provisioning.

In a VPLS, the PW (e.g., 140f) is likely already established. If the PW is not already established, the PW is set up by having the configuration-receiving PE (e.g., PE 120c) send an advertisement to the remote PE (e.g., PE 120a), indicating at least an identifier for the set of PEs that make up the VPN. The remote PE (e.g., PE 120a) can request further details about that set of PWs from the provisioning server (e.g., server 130), to complete configuration at the remote PE. Using single-sided signaling, the advertisement includes all the data used by the remote PE, so that the remote PE does not query the provisioning server.

In a VPWS, the PW is likely not yet established. The configured PE (e.g., PE 120c) then sends an advertisement to the remote PE containing at least a PW identifier. In some embodiments, described in more detail below, the advertisement includes an identifier for the AC on the configured PE (e.g., PE 120c) sending the advertisement. The remote PE (e.g., PE 120a), then either acknowledges the advertisement or stores the advertisement for later acknowledgement. The remote PE (e.g., PE 120a) acknowledges the PW (e.g., PW 140a) when the remote PE detects an AC on the remote PE that is associated with the same PE (e.g., AC 122a associated with PW 140a), as indicated by data received at the remote PE (e.g., PE 120a) from the provisioning server (e.g., server 130). Using single-sided signaling, the configuration data received by the configured node (e.g., 120c) from the server (e.g., server 130) includes all the data used by the remote PE (such as the AC 122a to be associated with the PW 140a). All this data is then included in the advertisement so that the remote PE (e.g., 120a) obtains the association without querying the provisioning server (e.g., server 130).

There are several advantages of the method 500 compared to the prior art practice. One obvious advantage is that a human administrator is not required at the time the conditions are satisfied for doing the configuring. The provisioning information is prepared ahead of time when it is stored on the server and when there is less time pressure and less chance of error. There is also less delay, because the configuration information is available automatically as soon as conditions are satisfied, without having to wait for a human in the process. Also, when a provider edge node is replaced, its configuration data is still available on the server.

By the same token, repeated configuration of the same attachment circuits are accommodated without any additional effort. For example, if the physical interface carrying logical attachment circuits 122i, 122j, 122k needs to be replaced, the information to configure it is already available on the server. The new physical interface is placed in PE 120c, and the server 130 is prompted for the configuration data appropriate for it. Without further human intervention, the desired configuration information is sent from the server 130 to PE 120c and used by PE 120c to configure the three logical attachment circuits and their associations with PWs 140a, 140b, 140e. Under prior art practice, the human administrator would have to be involved to manually configure the new interface, either locally or at a remote management tool server and force the new configuration data down to the affected edge nodes.

Another advantage is that only the configuration data for active interfaces are stored and used by the PE 120. For example, if CE 150b and CE 150c are not yet connected to PE 120a and 120b, respectively, then the configuration data sent to PE 120c is only for attachment circuit 122k to PW 140a to PE 120a. The configuration data for the other attachment circuits 122i, 122j are neither sent nor processed at the PE 120c. This saves both memory and computational resources at PE 120c and the network bandwidth that would be consumed to send the additional configuration data.

In some embodiments, only the changed configuration data is sent. For example, when CE 150c joins VPN 100, only the configuration data for AC 122i and PW 140e to PE 120b is sent to PE 120c. This is an advantage over a prior approach in which a large block of commands for configuring every customer interface is sent whenever there is any change. The prior art approach would send configuration data for not only the new AC 122i, but also for the AC 122j that PE 120c already has. The prior art approach thus consumes extra network bandwidth in transmitting the configuration data already in the possession of the receiving node. Furthermore, the prior approach also consumes extra processor resources on the receiving edge node as it causes the receiving edge node to either reconfigure the attachment circuit that is already operating or parses the commands to avoid reconfiguring that attachment circuit. Furthermore, as the extra processing is done, resources are diverted from processing traffic on the attachment circuit.

One prior approach uses a RADIUS server to store data indicating all the provider edge nodes on a given VPN. While the list of other provider edge nodes on a VPN is part of configuration data, providing only this information does not, by itself, alleviate the involvement of a human administrator. In the prior approach, the human administrator still touches each provider edge node to configure it as a member of the VPN and associate the VPN with one or more attachment circuits and to indicate the type of pseudo wire properties to use. Each provider edge node then sends a message to the RADIUS server to indicate that provider edge node's membership in the VPN and to request the names of the other provider edge nodes currently members of the VPN. In some embodiments of this approach, the RADIUS server polls each provider edge node to determine the VPN memberships as set on the provider edge by the human administrator.

In other prior art approaches, a manufacturer-specific command language (e.g., the command line instructions, CLI, of Cisco Systems Inc., San Jose, California) is used to configure attachment circuits for a VPN based on input by a human administrator. In some embodiments of the present invention, an open protocol is used to communicate between server 130 and provider edge nodes, e.g., PEs 120. An advantage of using an open protocol is that open protocol servers are widely deployed and supported. For example, m some embodiments the simple network management protocol (SNMP) is used to exchange messages between provider edge nodes and server 130. In some embodiments, server 130 is a Network Management Server (NMS) that is used or modified to handle the configuration data with SNMP. Other open protocols and corresponding or modified servers may be used to send some or all configuration data between configuration server (e.g., server 130) and provide edge nodes (e.g., PE 120), including but not limited to the Border Gateway Protocol (BGP), the Label Distribution Protocol (LDP), the generic attribute registration protocol (GARP) virtual local area network (VLAN) Registration Protocol (GVRP), and the Resource Reservation Protocol (RSVP).

### 4.0 PULL FROM PROVIDER EDGE

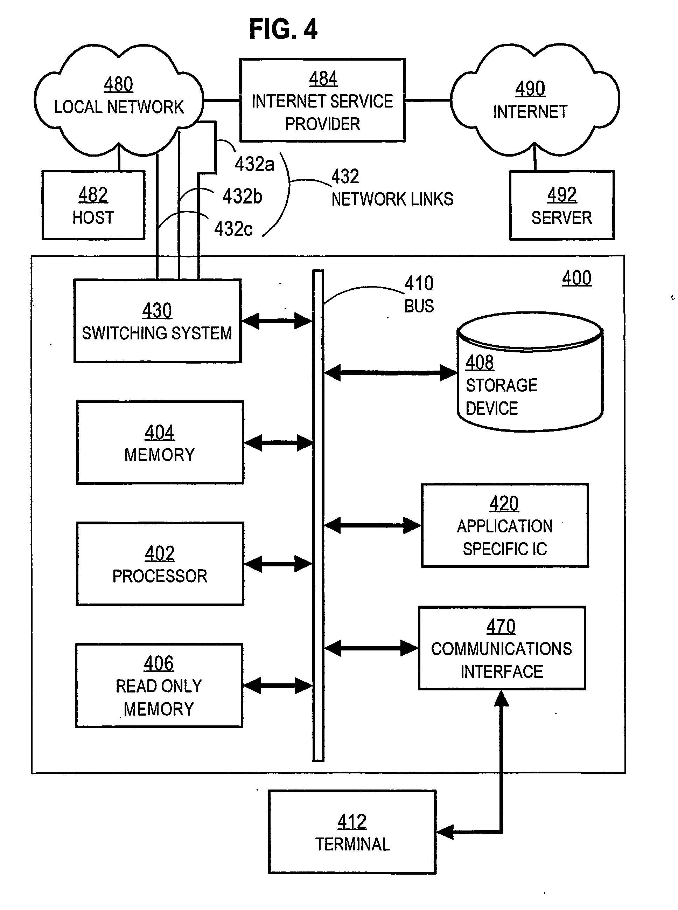

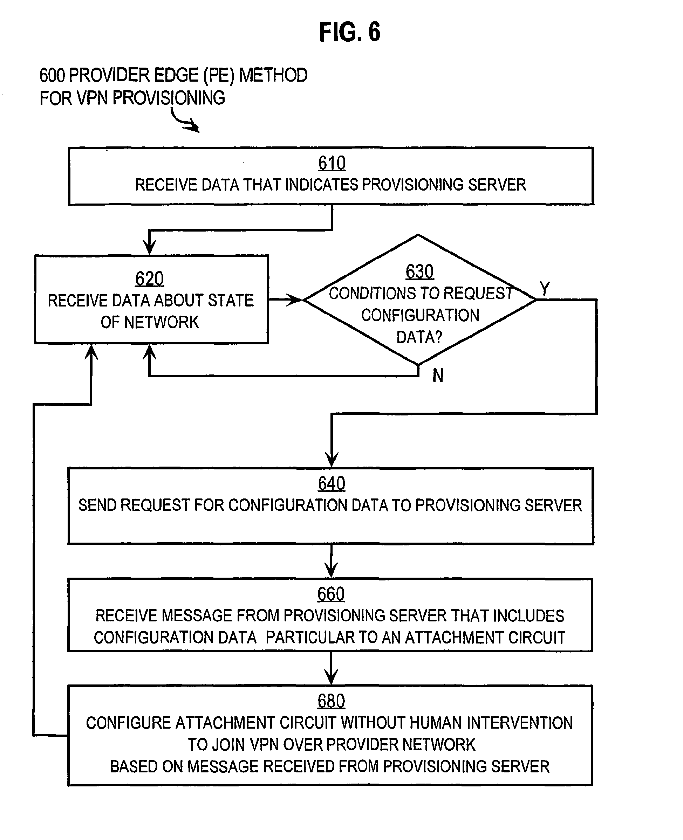

FIG. 6 is a flow diagram that illustrates at a high level a method 600 for provisioning a virtual private network at a provider edge node, according to an embodiment. FIG. 6 is presented as FIG. 4A in *Booth I.*

In step 610, minimal configuration data is received at the provider edge node (e.g., PE 120a). The minimal configuration data indicates an identifier for a remote server that dispenses configuration data for one or more VPNs on demand. For example, the minimal configuration data indicates the IP address or DSN name for server 130. Any method may be used to receive the minimal configuration data, as described above.

In step 620, data is received that indicates the state of the network. Any method may be used to receive the network state data, as described above for step 510. In an illustrated embodiment, step 620 includes receiving one or more data packets on an attachment circuit (e.g., AC 122c) connected directly to the provider edge (e.g., PE 120a).

In step 630, it is determined whether conditions are satisfied to request configuration data from a remote server. For example, configuration data is not requested from server 130 whenever data packets are received on an attachment circuit (e.g., AC 122c). Instead, in this example, step 630 includes determining whether the data packets indicate a first sign of life (FSOL) on the attachment circuit. Examples of FSOL include an ATM switched virtual circuit autodiscovery message. Any method to distinguish the FSOL on a physical or logical attachment circuit may be used. In some embodiments, particular methods described below to determine FSOL are used. When the FSOL is detected, then conditions are satisfied to request configuration data and control passes to step 640. Otherwise control passes back to step 620 to continue to monitor data about the state of the network.

In step 640, one or more requests for configuration data are sent to a remote provisioning server, e.g., server 130. Any appropriate protocol may be used to send the request. In various embodiments, the one or more requests are SNMP messages or BGP messages or messages of other protocols. In some embodiments, one or more requests are RADIUS protocol authorization requests.

In step 660, one or more messages are received from the provisioning server (e.g., server 130), either directly or indirectly, in response to sending the one or more requests in step 640. The received message includes configuration data for a particular attachment circuit or provider edge node. In various embodiments, the one or more response messages are SNMP messages or BGP messages or messages of other protocols. In some embodiments, one or more responses are RADIUS protocol authorization acceptance messages.

In step 680, an attachment circuit or provider edge node is configured without human intervention to join a VPN over the provider PSN, based on the data in the message received in step 660. Any method may be used to configure the provider edge node or attachment circuit, including, but not limited to executing CLI, interpreting byte code instructions of an open language, and executing machine code.

### 5.0 PUSH FROM CENTRAL SERVER

In some embodiments, the central server pushes configuration data to the provider edge node without a request from the provider edge node. The following also is described with respect to FIG. 2 in *Booth II.*

In some of these embodiments step 520 includes determining the current set of equipment involved in the virtual private network, including customer premises equipment, provider edge nodes, and other nodes in the provider network.

In some embodiments, step 520 includes determining the set of parameters associated with each category of service. For example, some virtual private network service providers allow customers to form pseudo wires that support one of three levels of service: gold, silver, and bronze. Each level has a different combination of quality of service parameters that are guaranteed along the pseudo wire, such as minimum bandwidth, maximum latency, maximum jitter, and support for voice or other media delivery services. The parameter values associated with these levels of service may change from time to time, for example, in response to customer demands and improvement to the underlying infrastructure of the packet switched network 110. Step 520 includes detecting changes in the parameter values associated with these levels of service. For example, in some embodiments, a human administrator updates the data stored at provisioning server 130, and a background task detects the change. In some embodiments, a human administrator updates the definition of a level of service at some other device or server, and provisioning server 130 is notified of the change by the other server or periodically checks the definitions at that other server by sending a request to that other server.

In some embodiments of step 530, it is determined whether conditions in the network are satisfied to send configuration data to one or more of the provider edge nodes, e.g., PEs 120, based on the data received in step 520. Any conditions may be used to determine when to send the configuration data to the edge nodes. In some embodiments, the current state data is compared against stored state data, and the condition is satisfied when the current state matches the stored state. In some embodiments, the condition is satisfied when a certain message is received from a human administrator, or from a different server, or network device. For example, in some embodiments, a customer subscribes to a VPN service on the provider's public web site, and the conditions are satisfied when the web site server sends a message to the configuration server 130 to activate the service. In some embodiments, the web server sends a SNMP set command to the provisioning server 130, to indicate when conditions are satisfied for sending configuration data to a provider edge node.

In some embodiments, the conditions are satisfied when a piece of equipment, other than the particular edge node to be configured, joins or leaves the set of edge nodes that support the VPN, for example, when the VPN is extended to include a new provider edge node. In some embodiments, the conditions are satisfied when a parameter associated with a level of service changes, e.g., when the minimum bandwidth associated with the gold level of service increases.

In a preferred embodiment, step 530 is performed without human intervention.

In step 540, the configuration server pushes configuration data to the provider edge node so that the provider edge node can configure the customer interface without human intervention to send data over the VPN. Thus a human administrator does not touch the provider edge node at the time it is configured to connect an attachment circuit to a VPN. This is called zero touch provisioning. Furthermore, in these embodiments, the edge node has not requested the configuration data; instead the configuration data is pushed, unsolicited to the edge node.

For example, when the provisioning server 130 receives a SNMP set command to send configuration data to PE 120c, provisioning server 130 responds by sending configuration data to PE 120c.

### 6.0 CUSTOMER SELF-PROVISIONING

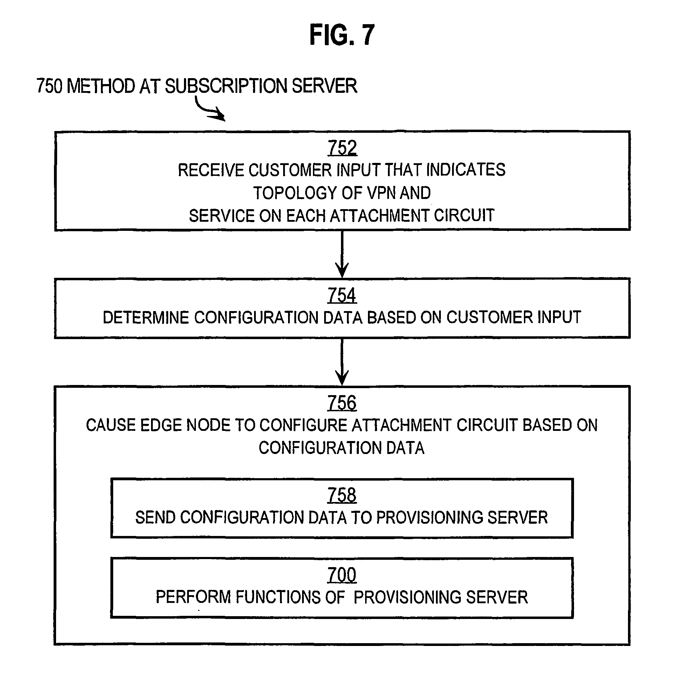

In some embodiments, the configuration data is provided based directly on customer inputs. Some of these embodiments are described with respect to FIG. 7, FIG. 8, FIG. 9A and FIG. 9B which are presented as FIG. 2A, FIG. 4, FIG. 1A and FIG. 1B, respectively, in *Booth III.*

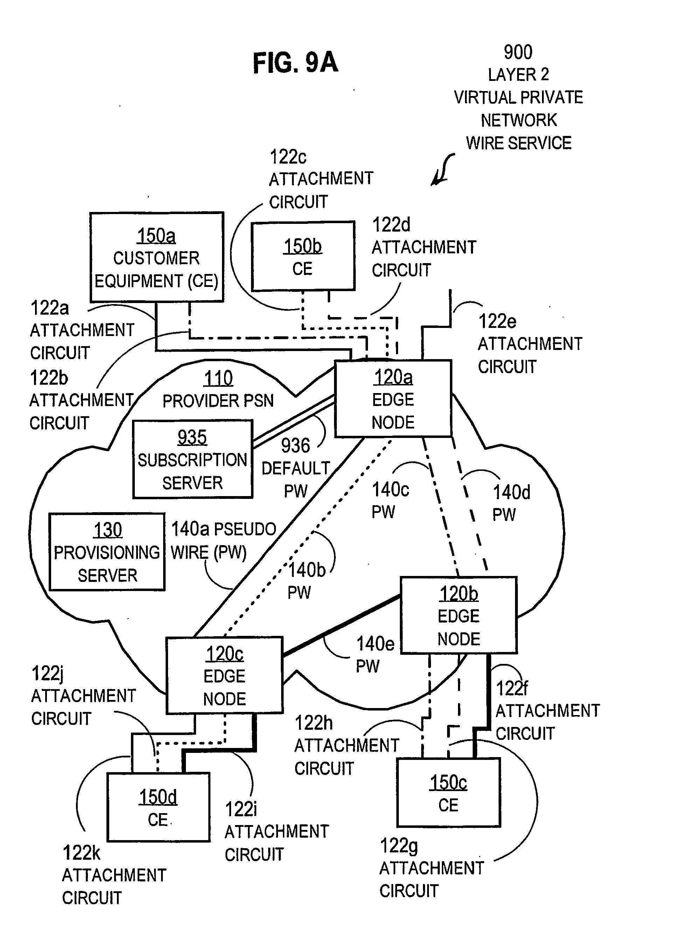

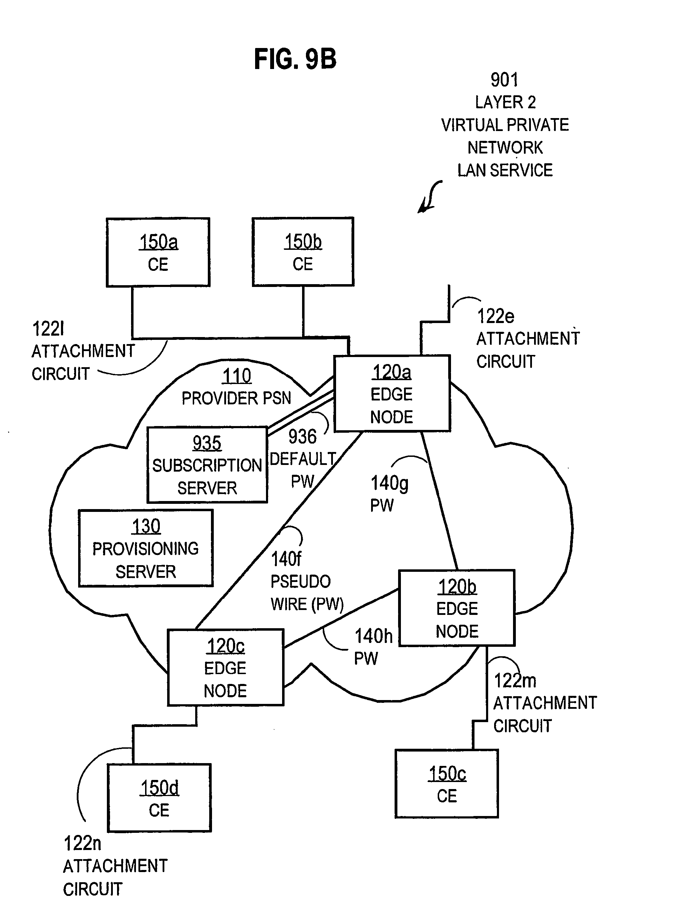

FIG. 7 is a flow diagram that illustrates at a high level a method 750 for provisioning a virtual private network at a subscription server distinct from a provider edge node, according to an embodiment. A subscription server on the provider's network 110 is depicted in FIG. 9A and FIG. 9B. FIG. 9A is a block diagram that illustrates a virtual private network 900 on a provider packet-switched network for a virtual private wire service, according to an embodiment with a subscription server. FIG. 9B is a block diagram that illustrates a virtual private network 901 on a provider packet-switched network for a virtual private LAN service, according to an embodiment with a subscription server. FIG. 9A is similar to FIG. 1A but includes a subscription server 935 connected to an edge node 120a through a default pseudo wire.936. Likewise, FIG. 9B is similar to FIG. 1B but includes the subscription server 935 connected to the edge node through the default pseudo wire.936.

In step 752, customer input is received that indicates a topology for a VPN and a level of service on each attachment circuit. This input specifies the service to which the customer intends to subscribe. In some embodiments, only topology information is received and service level is based on default values.

The topology information indicates the location of customer premises equipment or attachment circuits on each customer premises equipment to be connected in the VPN, or both. In some embodiments, the topology information also indicates the type of VPN service, e.g., whether VPLS or VPWS or IPLS or some other service. In some embodiments, the topology information also indicates an identifier for the VPN. In some embodiments, e.g., those choosing VPWS, the topology information also indicates the mapping of an attachment circuit on one customer premises equipment to an attachment circuit on another piece of equipment. In some embodiments, default values are implicitly received for any topology information that is not explicitly received.

The level of service information indicates for each attachment circuit, the physical media, a link layer (layer 2) protocol used on the attachment circuit, a virtual circuit identifier, a minimum bandwidth, a maximum jitter, a maximum latency, or one or more other properties, or some combination. In some embodiments, default values are implicitly received for any level of service information that is not explicitly received.

In some embodiments, step 752 includes receiving customer authentication, billing and authorization information. For example, in some embodiments, information is received from the customer during step 752 that gives customer credit card information or purchase order information or other information used by the provider to extract payment from the customer. In some embodiments, step 752 includes receiving user identifiers and passwords for users who may access the VPN.

Any method may be used to receive this data. In some embodiments, the customer input is input manually to the subscription server by an agent of the customer and stored locally or on a remote node. In some embodiments, the customer input is input manually to a remote agent and forwarded to the subscription server. In some embodiments, the customer input is input manually to a text editor according to an agreed format and stored in one or more files that are sent to the subscription server. For example, in some embodiments, customer input is input using an extensible markup language (XML) editor and sent as an XML file. In some embodiments, the data is retrieved as a file, such as an XML file, from storage locally or remotely. In some embodiments, the data is sent in a message from another node on the network either in response to a message from the subscription server or in an unsolicited message. In some embodiments a combination of different methods is used.

In some example embodiments, the subscription server 935 is a server on the World Wide Web, which exchanges messages with a World Wide Web client (called a Web browser) using the HyperText Transfer Protocol (HTTP), an application layer (layer 7) protocol. In some of these embodiments, the Web server is available to the public with an address on the public Internet. In response to being contacted by the customer's Web browser, the Web server sends messages with scripts (such as JAVA forms) that prompt the customer for specific input, receives the customer response, and returns the response to the Web server.

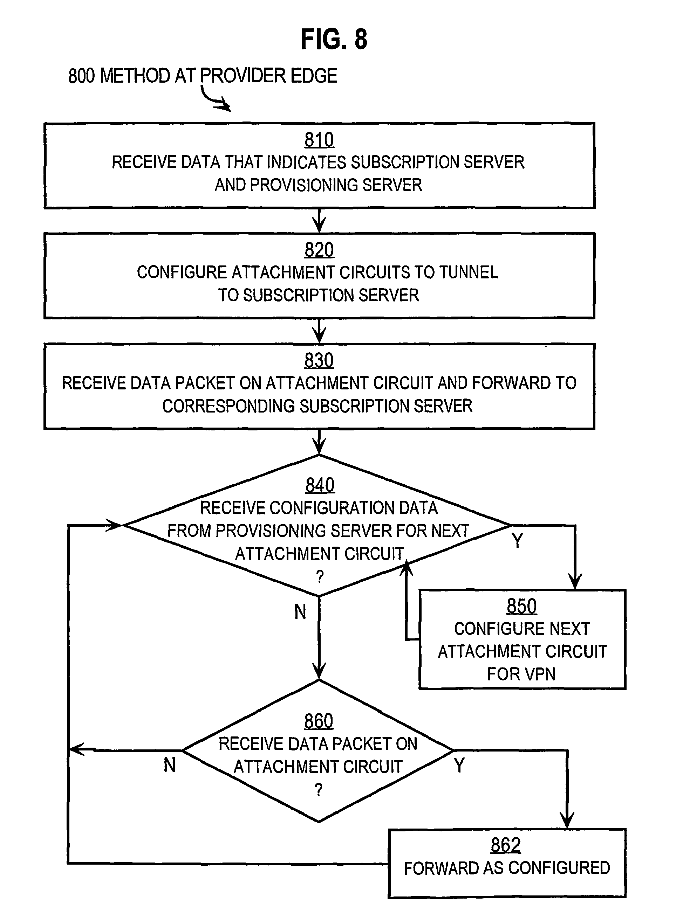

In some embodiments, described in more detail below with reference to FIG. 8, the subscription server 935 is a server on the provider network 110. One or more attachment circuits on one or more edge nodes are initially configured as captive portals, well known in the art, or similar constructs using other protocols that tunnel all traffic to the server 935. A captive portal technique forces an HTTP client on a network (e.g., on CE 150) to see a special web page (e.g., a page generated by subscription server 935) before using the Internet normally. This is done by intercepting all HTTP traffic, regardless of address, until the user is allowed to exit the portal. The use of captive portals is common at the time of this writing for authenticating a user, such as a user of a wireless network card or other public access network ports. But the use of captive portals on attachment circuits to provider edge nodes prior to VPN configuration is not known to applicants.

For example, all attachment circuits (122a, 122b, 122c, 122d, 122e) are initially switched to server 935, as indicated by default PW 936. Messages are exchanged between a web-based subscription server 935 and a web browser on customer premises equipment (e.g., 150a, 150b) that prompt the customer for the information to be received during step 752. In response, the subscription server 935 receives the customer input. In other embodiments other techniques similar to captive portals for HTTP traffic are used for other application layer protocols.

Any customer input relevant to forming configuration data for configuring a provider edge node without further human intervention by the provider may be used. For purposes of illustration, it is assumed that the information listed in Table 5 is obtained during step 752. The customer input is described in Table 5 as if values are obtained for certain input fields. The input fields may be presented to a customer in any manner known in the art, such as text fields in a form in a computer display window, as pull down menus, as buttons, as attributes in an XML document, or as some combination. In other embodiments, some input fields are split into several different input fields, or some input fields that are different in Table 5 are combined into a single input field, or both.

In the illustrated example, it is assumed that the customer wants to establish a VPWS VPN, like VPN 100, for its sales department with CE 150a and CE 150b serving as hubs that represent a network segment for a main computer and a separate network segment for a backup computer at corporate headquarters. The spokes for each hub are CEs 150c, 150d in stores at two different locations, one at a store location in Ourtown separate from corporate headquarters and a second in a different city name Twotown. Table 5 shows customer names for the VPWS VPN and for the CEs 150a, 150b, 150c, 150d. Table 5 also shows customer names and non-default properties for individual attachment circuits between the first hub and the first spoke (e.g., attachment circuit 122b on CE 150a directed to attachment circuit 122h on CE 150c). It is assumed for purposes of illustration that individual attachment circuits are ATM virtual circuits identified by their virtual path ID (VPI) and virtual channel ID (VCI), as is well known in the art. These IDs are indicated in Table 5 by the values "2" and "34" separated by a period.

**Table 5. Example customer input information for VPWS**

| **input field name** | **description** | **sample values** |
|---|---|---|
| customer | identifier for customer | CorpABC |
| address | Billing address | 1234 Main Street, Suite 1000 Ourtown, OH 99999-9999 |
| payment | payment authorization | purchase order #; credit card info |
| contact | person who represents customer | Jane Smith, President, 800-555-1234 |
| VPN ID | customer identifier for VPN | Sales Dept |
| VPN type | whether VPWS, VPLS or other | VPWS |
| Hubs | customer identifiers for customer equipment serving as hubs | main, bkup |
| loc(1) | location of first hub | 1234 Main Street, Suite 1000 Ourtown, OH 99999-9999 |
| Spokes of 1^{st} Hub | customer identifiers for customer equipment serving as spokes for one hub | Twotown, Ourtown |
| loc(1,1) | location of first spoke for first hub | 9876D First Street, Twotown, KY 88888-8888 |
| numAC(1,1) | number of attachment circuits from first hub to first spoke | 1 |
| Media(1,1,1) | media type for first attachment circuit from first hub to first spoke | ATM |
| ACname(1,1,1) | name of first attachment circuit from first hub to first spoke | 2.34 |
| ACprop(1,1,1,1) | property name-value pair for first non-default property of first attachment circuit from first hub to first spoke | level.silver |
| ··· | ··· | ··· |

It is assumed for purposes of illustration that a service level of bronze is the default service level over the provider network, and that the customer can specify a higher level of service. In Table 5, the customer specifies a silver level of service over the provider network 110. The last row in Table 5 contains ellipses to indicate further customer input is obtained to complete the information used to construct configuration data. For example, inputs for other non-default properties for the first attachment circuit and information for other attachment circuits from the first or second hub to the same or different spokes are entered where Table 5 shows the ellipses.

It is here noted that the customer input information does not specify anything about the provider equipment. For example, the customer input information does not specify provider edge nodes PE 120a, 120b, 120c, nor pseudo wires PW 140a through PW 140e.

The customer input for a VPLS is much simpler and is illustrated in Table 6. Individual attachment circuits and their properties need not be specified.

**Table 6. Example customer input information for VPLS**

| **input field name** | **description** | **sample values** |
|---|---|---|
| customer | identifier for customer | CorpABC |
| address | Billing address | 1234 Main Street, Suite 1000 Ourtown, OH 99999-9999 |
| payment | payment authorization | purchase order #; credit card info |
| contact | person who represents customer | Jane Smith, President, 800-555-1234 |
| VPN ID | customer identifier for VPN | Voice intercom |
| VPN type | whether VPWS, VPLS or other | VPLS |
| Nodes | customer identifiers for customer equipment serving as nodes | main, bkup, Twotown, Ourtown |
| Media | media type for attachment circuits | Ethernet |
| loc(1) | location of first node | 1234 Main Street, Suite 1000 Ourtown, OH 99999-9999 |
| ··· | ··· | ··· |

In step 754, configuration data is determined based on the customer input information. For example, the provider edge nodes nearest the locations of the customer premises equipment are determined and identified based on the customer input for locations of the customer premises equipment. One or more physical interfaces on the provider edge nodes consistent with the customer identified media type are determined and associated with the customer based on the customer input for the media type. A list of provider edge nodes to be connected by pseudo wires to another provider edge node is determined based on the customer input data for VPN service type. For example, based on the VPN type "VPLS" in Table 6, configuration data is determined that lists all three provider edge nodes to be connected by a full mesh of shared pseudo wires. Alternatively, based on the VPN type "VPWS" and the list of individual attachment circuits in Table 5, configuration data is determined that maps the provider edge node of each attachment circuit to a remote provider edge node and attachment circuit. Each different pseudo wire is given a name generated during step 754. The properties of each pseudo wire that connects a pair of provider edge nodes are determined based on the default properties for pseudo wires and any non-default properties specified in the customer input.

In step 756, the subscription server causes one or more edge nodes to configure one or more attachment circuits to join a VPN. In some embodiments, step 756 is performed immediately by sending configuration data to all provider edge nodes immediately. In some embodiments, step 756 is performed on fewer than all attachment circuits at a time, as certain conditions are satisfied. For example, in some embodiments step 756 includes step 758. In step 758 the configuration data is sent to a separate provisioning server that stores the configuration data and tests network conditions. When certain conditions are satisfied, then the provisioning server sends configuration data to one or more provider edge nodes with attachment circuits implicated by the activity. The process performed at a provisioning server is described in more detail above. In some embodiments, step 756 includes step 700. In step 700 the subscription server performs the functions of the provisioning server. For example, the subscription server stores the configuration data and tests network conditions as described in more detail above. When certain conditions are satisfied, then the subscription server sends configuration data to one or more provider edge nodes with attachment circuits implicated by the activity.

FIG. 8 is a flow diagram that illustrates at a high level a method 800 for provisioning a virtual private network at a provider edge node, according to an embodiment.

In step 810, data is received at the provider edge node that indicates a subscription server and a provisioning server. Any method may be used to receive this data, as described above with reference to step 752 for receiving customer input data. In some embodiments, in which provisioning information is pushed to each provider edge node without a request from the provider edge node, step 810 excludes data that indicates the provisioning server.

In step 820, one or more attachment circuits on the provider edge node are configured to tunnel all traffic to the subscription server host. In some embodiments, only HTTP application layer (layer 7) traffic is forwarded in the tunnel to the subscription server host, while other types of data packets are ignored, and the attachment circuit so configured is a "captive portal." The subscription server host in such embodiments typically includes an HTTP server acting as the subscription server itself or an agent for the subscription server. In other embodiments, the subscription server or an agent for the subscription server is designed to handle one or more other protocols above the link layer, and these protocols are also forwarded through the tunnel to the subscription server.

In various other embodiments, various authentication protocols for various layers may be used to engage the subscription server host or an agent for the subscription server. Further traffic on the attachment circuit is ignored until authentication is received. Authentication is offered by the subscription server, or its agent, if sufficient customer input, such as payment information, is received for the corresponding attachment circuit. In some embodiments the authentication message includes the configuration data for the attachment circuit.

Any authentication protocol known in the art may be used. Other authentication protocols, currently well known in the art, which can be used to direct traffic on an attachment circuit only to the subscription server include, but are not limited to the following:
Point-to-Point Protocol (PPP)
Extensible Authentication Protocol (EAP)
IEEE 802.1X
Protocol for carrying Authentication and Network Access (PANA)
Cisco Discovery Protocol (CDP)
HTTP Identity Proxy (HIP).

In some of these embodiments the subscription server executes on the provider edge node to interpret data packets received on the attachment circuit. Many of the other well-known authentication protocols listed above are suitable for a subscription server that is located on the same edge node that is interfacing with the customer premises equipment.

In an illustrated embodiment, provider edge node 120a includes Ethernet media ports, FR media ports and ATM media ports. All the ports are initially configured during step 820 to send HTTP data packets to subscription server 935 and to not forward any other data packet traffic. In effect, this creates the default PW 936 for HTTP traffic.

In step 830, a data packet is received on one of the attachment circuits which are tunneled to the subscription server. The data packet is forwarded to the subscription server for interpretation.

In an illustrated embodiment, HTTP data packets arrive at PE 120a on a particular ATM media port (e.g., the physical attachment circuit that carries logical AC 122a and logical AC 122b) from CE 150a. The ATM payloads are stripped off and packaged in TCP/IP data packets directed to subscription server 935. TCP/IP indicates data packets using the Transmission Control Protocol (TCP, a layer 4 protocol) over the Internet Protocol (IP, a layer 3 protocol). Return HTTP data packets from subscription server 935 directed to the particular ATM port are extracted from TCP/IP payloads and loaded into ATM payloads and placed on the attachment circuit. No other ATM payloads are forwarded. This allows the subscription server 935 to communicate with a Web browser on CE 150a to obtain customer input for subscribing to VPN service. It is assumed for purposes of illustration that the customer provides the information indicated in Table 1 to the subscription server 935 during this exchange. In some embodiments, when sufficient customer input is received, the subscription server notifies the customer that the customer can begin sending data packets according to the subscribed service.

As another example, in some embodiments, a data packet arrives on one of these attachment circuits and is forwarded in a PPP tunnel to the host for the subscription server for authentication. PPP data packets are exchanged in a manner similar to the exchange of username and password in more common authentication processes until the subscription server is satisfied that sufficient customer input has been received to derive configuration data for one or more attachment circuits, which may include the attachment circuit on the PPP tunnel. If the data packet sent through the PPP tunnel makes no sense to the subscription server, then the data packet is ignored and no progress is made in configuring any attachment circuit. When sufficient customer input has been received, the PPP packets from the subscription server stop. In some embodiments, a final PPP data packet from the subscription server notifies the customer that the customer can begin using one or more of the attachment circuits supported by the subscription input.

In some embodiments, data packets not directed to the subscription server or its host are not ignored. Instead, each is examined to pick out attachment circuit identifiers. For example, the data packet received on the ATM media port is examined to determine an ATM virtual circuit identifier. The attachment circuit identifier is then sent in an authentication request message to the provisioning server 130 to obtain configuration data for the virtual circuit. Before sufficient customer input is transmitted to the subscription server, however, there is not enough configuration data for that attachment circuit. Thus, at least initially, provisioning server 130 does not send authentication for the attachment circuit. In the illustrated embodiment, initially there is not enough configuration data for the ATM virtual circuit and PE 120a does not forward such non-HTTP traffic. In some embodiments, the data packets for such other traffic are stored for transmission after the corresponding attachment circuit is configured. In some embodiments, data packets for such other traffic are simply dropped.

When conditions for sending the configuration data to a provider edge node are satisfied, the configuration data is sent to the provider edge node, as described above in step 530 of method 500. For example, a data packet received on the ATM media port is examined to determine an ATM virtual circuit identifier, e.g., "2.34." The virtual circuit identifier is then sent in an authentication request message to the provisioning server 130 to obtain configuration data for the virtual circuit. Now there is enough configuration data for that virtual circuit; and the provisioning server 130 sends an authentication message with configuration data for ATM virtual circuit "2.34."

In step 840 it is determined whether configuration data is received at the provider edge node from a provisioning server for an attachment circuit. For example, it is determined in step 840 whether configuration data is received at PE 120a from provisioning server 130. Any method may be used to receive the configuration data. In some embodiments the configuration data is received in one or more authentication messages from an authentication server, such as in a RADIUS authentication message from a RADIUS server or a PPP authentication message over a PPP tunnel to the provisioning server. If configuration data is received, control passes to step 850; otherwise control passes to step 860.

In step 850, an attachment circuit is configured without human intervention to join a VPN based on the configuration data received. For example, AC 122b is configured based on that configuration data to join VPN 100 by switching its traffic through PW 140d to PE 120b and AC 122h. Control then passes back to step 840 to determine whether more configuration data is received.

If configuration data is not received, then control passes to step 860 to determine whether traffic is received on one of the attachment circuits. If not, control passes back to steps 840 and 860 to determine what kind of traffic is received. If it is determined in step 860 that a data packet is received on an attachment circuit, then control passes to step 862.

In step 862 the traffic is forwarded as configured. If the attachment circuit is still initially configured to forward only certain protocol traffic to the subscription server, then only that type of traffic is forwarded to that server, but no other traffic is forwarded. For example, if the attachment circuit is still initially configured to forward only HTTP traffic to the subscription server, then HTTP traffic is forwarded to that server, but no other traffic is forwarded. If the attachment circuit has been configured to join a VPN by switching traffic to one or more pseudo wires, then the data packet is forwarded to the corresponding one or more pseudo wires. Control then passes to steps 840 and 860 to determine the next data received.

In some embodiments, step 862 includes a step to request configuration data for an attachment circuit. For example, if the traffic is non-HTTP traffic on an attachment circuit still initially configured to forward only HTTP traffic to the subscription server, then the data packet is examined to determine an attachment circuit identifier. The identifier is then sent to the provisioning server to request configuration data for the corresponding attachment circuit. If sufficient customer input has been received to form the configuration data for that attachment circuit, then the provisioning server sends the configuration data. The configuration data is detected in step 840 and used to configure the attachment circuit in step 850, described above.

In some embodiments, all attachment circuits on all provider edge nodes are initially configured to send certain protocol traffic to one or more subscription servers. Then any customer may connect any CE to an appropriate media port as a first attachment circuit on the PE and communicate with the subscription server using the designated protocol. After that exchange, one or more attachment circuits on one or more provider edge nodes, including the first attachment circuit or not, is joined to the VPN subscribed to. In some embodiments, only certain attachment circuits are configured to communicate with the one or more subscription servers using the certain protocol, and the customer must connect to the provider edge node using one of those attachment circuits.

Thus, attachment circuits are configured to join to a VPN based purely on customer inputs, without human intervention by the provider.

### 7.0 FIRST SIGN OF LIFE (FSOL)

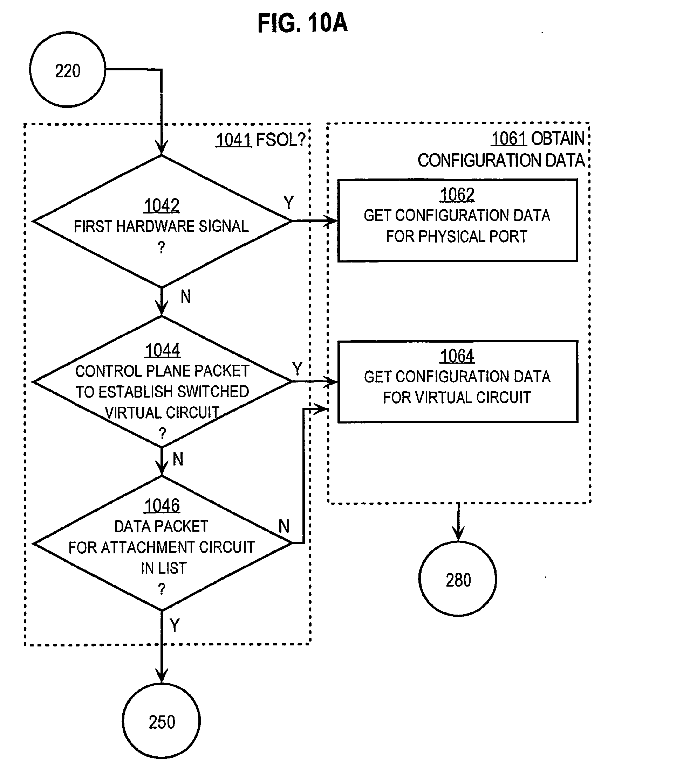

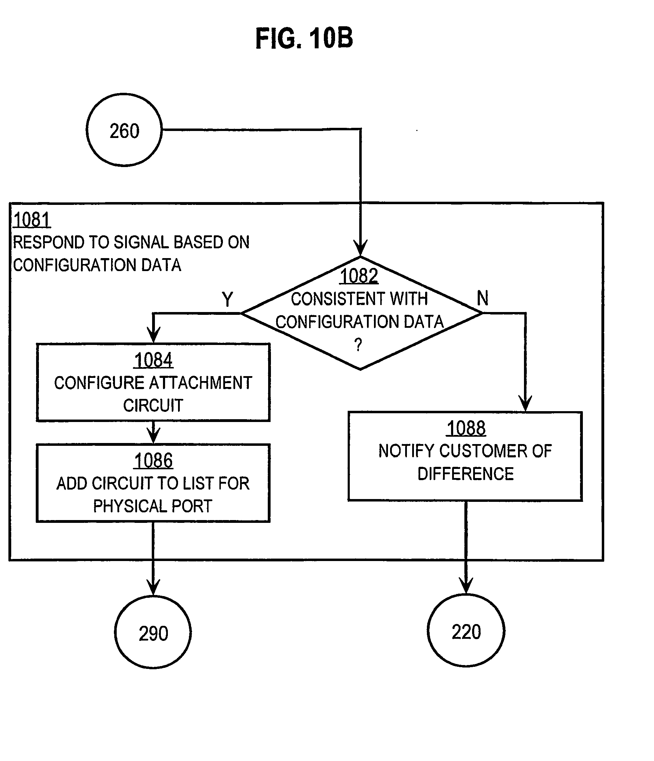

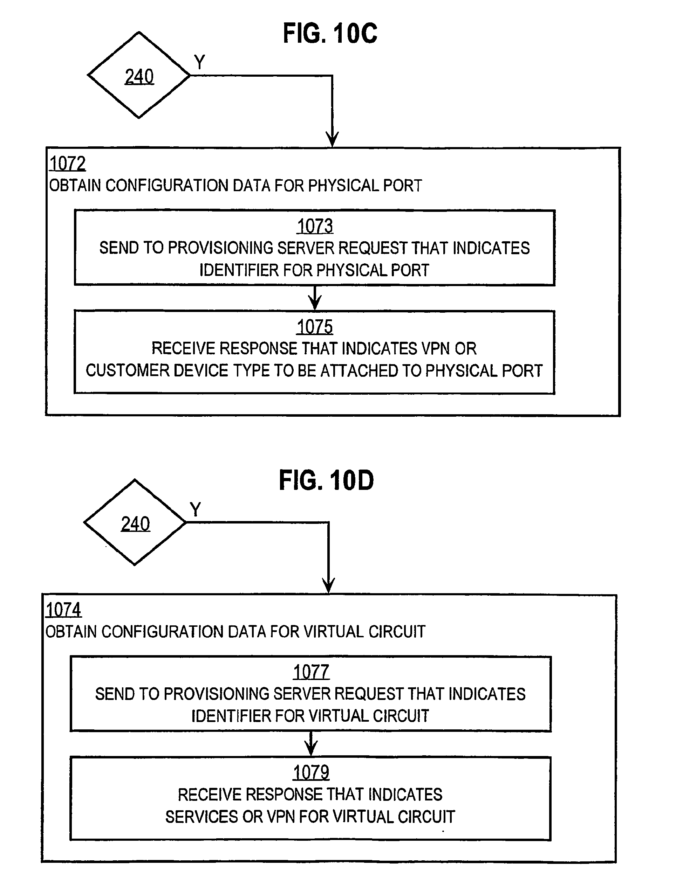

More details on the first sign of life (FSOL) are described in this section with reference to FIG. 10A, 10B, 10C, 10D, which are presented as FIG. 2B, 2C, 2D, 2E in *Booth IV.*

### 7.1 METHOD FOR DETECTING FSOL

FIG. 10A is a flow diagram that illustrates steps of the method of FIG. 2A for detecting a first sign of life (FSOL) in more detail, according to an embodiment. Step 1041 is a particular embodiment of step 240 and step 1061 is a corresponding particular embodiment of step 260. After a signal is received in step 220, control passes to step 1041. Step 1041 includes steps 1042, 1044, 1046.

In step 1042, it is determined whether the signal is a hardware signal from a customer device that has just been connected to a physical port of the provider edge node and powered up. For example any sequence of voltage changes in the design range for the equipment on a port where there was no physical attachment before can be treated as a hardware signal to indicate an attachment circuit is now attached to the port,. If the signal is an initial hardware signal, then the signal is a FSOL. If it is determined that the signal is not an initial hardware signal, control passes to step 1044, described in more detail below.

If it is determined that the signal is an initial hardware signal, then control passes to step 1062. In step 1062 configuration data is obtained for the physical port, itself. For example, if a hardware signal is received on a physical port with physical port ID 5 for the first time, control passes to step 1062 to obtain configuration data for that physical port.

FIG. 10C is a flow diagram that illustrates step 1062 of the method of FIG. 10A for obtaining configuration data for a physical port in more detail, according to an embodiment 1072. Step 1072 is a particular embodiment of step 1062. Step 1072 includes step 1073 and step 1075. In step 1073 one or more requests are sent to one or more provisioning servers identified in step 21 of FIG. 2A. The request identifies the sending node and the physical port, for example by the IP address of the sending node in the header of the request and the physical port ID number of the port. For example, a request from PE 120a for port # 4 includes a source address of 1.1.1.1 in an IP header and a physical port ID of 4, with no data indicating a particular virtual circuit.

In step 1075, one or more response messages are received from one or more provisioning servers. The response messages include data that indicates:
1] one or more VPNs used by that physical port; or
2] a customer device type to be connected on that physical port; or
3] one or more virtual circuits to be expected on that physical port; or some combination of 1], 2] and 3]. For purposes of illustration, it is assumed that a response message is received that indicates the physical port is to be connected to an Ethernet LAN, with different VLANS that join either a VPWS VPN 100 or a VPLS VPN 101.

After step 1062, control passes to step 280, described in more detail in a later section with reference to FIG. 10B.

In step 1044, it is determined whether the signal is a control plane data packet for establishing a new switched virtual circuit. For example, it is determined that the signal is a control data packet to establish an ATM switched virtual circuit or a call setup control data packet to establish a FR switched virtual circuit or a PPP session. If it is determined that the signal is not a control plane data packet for establishing a new switched virtual circuit, control passes to step 1046, described in more detail below.

If it is determined in step 1044 that the signal is a control plane data packet for establishing a new switched virtual circuit, control passes to step 1064. In step 1064 configuration data is obtained for the virtual circuit identified in the control plane data packet. For example, if an ATM control plane data packet is received to establish an ATM virtual circuit, the data packet contains an identifier for the virtual circuit that includes aVPI and VCI pair, e.g., "2.34" as described above. The provider edge node adds an interface name for the ATM interface over which the control data packet was received, e.g., "20." Configuration data is then retrieved for that particular virtual circuit e.g., "20.2.34." Similarly, a FR call setup data packet includes an identifier for the virtual circuit called a data-link connection identifier (DLCI), e.g., "11." The provider edge node adds an interface name for the FR interface over which the control data packet was received, e.g., "25." Configuration data is then retrieved for that particular virtual circuit e.g., "25.11."

FIG. 10D is a flow diagram that illustrates step 1064 of the method of FIG. 10A for obtaining configuration data for a virtual circuit in more detail, according to an embodiment 1074. Step 1074 is a particular embodiment of step 1064. Step 1074 includes step 1077 and step 1079. In step 1077 one or more requests are sent to one or more provisioning servers identified during step 213 of Fig. 2A. The request identifies the sending node and the virtual circuit, for example by the IP address of the sending node in the header of the request and the virtual circuit identifier. For example, a request from PE 120a for the ATM switched virtual circuit includes a source address of 1.1.1.1 in an IP header and a virtual circuit ID of "20.2.34." Similarly, a request from PE 120a for the FR switched virtual circuit includes a source address of 1.1.1.1 in an IP header and a virtual circuit ID of "25.11."

In step 1079, one or more response messages are received from one or more provisioning servers. The response messages include data that indicates:
1] a VPN used by that virtual circuit; or
2] service properties for that virtual circuit;
3] one or more target provider edge nodes for those VPNs; or
4] one or more pseudo wires and pseudo wire properties to each of those target provider edge nodes; or
5] one or more target attachment circuits for each pseudo wire; or some combination of 1], 2], 3], 4] and 5]. If the virtual circuit is not found in the configuration data, then a message is returned that the customer has not subscribed to such a virtual circuit. For purposes of illustration, it is assumed that a response message is received that indicates the virtual circuit "20.2.34" is configured for VPWS service on VLAN 100 to target PE 120b over PW 140d to AC 122g, with a budget of 20% of the bandwidth and cell packing value of 1.

After step 1064, control passes to step 280, described in more detail in a later section with reference to FIG. 10B.

Not every virtual circuit is a switched virtual circuit that uses control plane data packets to explicitly establish the circuit. Some virtual circuits are permanent, or assumed in place, and are used to send data packets from the outset. For example, Ethernet VLAN and ATM and FR permanent virtual circuits send data packets from the beginning, without explicit control plane data packets to establish the circuit. For these virtual circuits, a FSOL is implicit in the first data packet received that identifies itself as belonging to that virtual circuit. In the illustrated embodiment, this implicit FSOL is detected by using the list 129 of active attachment circuits associated with each physical port, described above in step 214. In other embodiments other methods may be used.

For example, cHDLC packets start with a hexadecimal value "0F00," possibly with additional bits set. Given the start value of 0F00 is detected in a data packet received, the cHDLC protocol is used to determine the virtual circuit associated with that data packet. Similarly, HDLC keep-alive data packets could be sought; such keep-alive messages include the value "8F008035." Given the value of 8F008035 is detected in a data packet received; the HDLC protocol is used to determine the virtual circuit associated with that keep-alive data packet. Similarly, FR LMI keep-alive data packets could be looked for; such keep-alive messages include the hexadecimal value "FCF1" and DLCI hexadecimal value "1023." Given the values of FCF1 and 1023 are detected in a data packet received, the FR LMI protocol is used to determine the virtual circuit associated with that keep-alive data packet. Similarly, FR ANSI/UTI keep-alive data packets could be looked for; such keep-alive messages include the hexadecimal value "0001," and DLCI hexadecimal value "0." Given the values of 0001 and 0 are detected in a data packet received, the FR ANSI/UTI protocol is used to determine the virtual circuit associated with that keep-alive data packet. Similarly, a PPP data packet is indicated by the hexadecimal value "FF03." However, "FF03" is also used in other protocols to indicate a broadcast data packet; so, in some embodiments, if the hexadecimal value is FF03, then other fields in the data packet are also examined to determine whether the packet is a PPP control packet, such as a Link Control Protocol (LCP) data packet. The above examples apply to determine the virtual circuit for port mode operation (i.e., the whole physical port contains traffic for only a single virtual circuit), but would not be sufficient to identify individual FR VCs which are multiplexed on the same physical port. To identify a multiplexed VC, further examination of the packets are involved. For example, in some embodiments, to identify individual FR VCs, incoming LMI Full Status messages are examined for the list of VCs. In some embodiments, the DLCI field on incoming data packets are examined. Thus a virtual circuit ID, if any, can be determined for any data packet received.

In step 1046, it is determined whether the signal is a data plane data packet for an attachment circuit that is already associated with the physical port. For example, it is determined that the signal is a data packet on an Ethernet VLAN or ATM or FR permanent virtual circuit in the list of attachment circuits associated with the physical port. For example, if an Ethernet data packet is received on physical port # 4 with a VLAN tag of "17," the provider edge node checks against the list of active attachment circuits, as illustrated in Table 3, above. If the list is null or if the list does not contain a VLAN tag of "17", then no data for this virtual circuit has yet been received by the provider edge node, and the data packet is a FSOL. In the illustrated embodiment, the first time an Ethernet data packet with a VLAN tag "17" is received on physical port 4, the null list is detected, as shown in Table 2, and the data packet is considered FSOL. Control then passes to step 1061 to obtain configuration data for the attachment circuit. If consistent configuration data is returned for this virtual circuit, then in step 280, described in more detail below with reference to FIG. 10B, the virtual circuit ID is added to the list of active attachment circuits for the physical port. For example, if consistent configuration data is received for VLAN 17, then VLAN 17 is added to the list 129a for physical port # 4. The illustrated list of attachment circuits will then appear as shown in Table 3.

Any method may be used to distinguish a virtual circuit or physical circuit from a null value. In some embodiments "null" is replaced with a special code that indicates an active attachment circuit, but one that is never used as a VLAN tag. In some embodiments, the list is indicated as a number of entries followed by a list of those entries or a pointer to the next entry. A null list has "0" for the number of entries and a dedicated physical port has a"1" for number of entries but no value, or "0" for the pointer.

If it is determined that the signal is a data plane data packet for an attachment circuit that is already associated with the physical port, control passes to step 250, described above, to determine whether the signal is a control plane data packet to tear down a virtual circuit and, ultimately, to process the signal normally (including ignoring the signal).

If it is determined in step 1046 that the signal is not a data plane data packet for an attachment circuit that is already associated with the physical port, then the signal is FSOL and control passes to step 1061. In step 1062 configuration data is obtained for the dedicated physical circuit identified in the data packet, if any, as described above. In step 1064 configuration data is obtained for the virtual circuit identified in the data packet, if any, as described above. In some embodiments, when the physical port comes up, the provisioning server is contacted and if the response is to join a VPN at the interface level, all further sensing for VCs and such are disabled. For example, steps 1044 and 1046 are omitted. So, regardless of DLCI, VPI/VCI, VLAN ID or any other identifier for a logical virtual circuit, if the provisioning response is an interface-level service, the interface is not checked for auto-detection of any VCs until something changes for that interface. In some embodiments, a multi-stage process is used. Determining VPN configuration based on a physical interface level is the first stage. The next level of granularity would be VPN configuration based on a detected virtual circuit. The next level of granularity would be VPN configuration based on layer 3 protocols carried within a circuit type, etc. Also, for Ethernet LAN with no VLAN tags, the untagged frames really can be considered another virtual circuit along with the tagged frames.

In other embodiments, steps 1042, 1044, 1046 are performed in a different order than shown in step 1041.

### 7.2 METHOD FOR RESPONDING TO FSOL

FIG. 10B is a flow diagram that illustrates step 280 of the method of FIG. 2A for responding to a FSOL based on configuration data in more detail, according to an embodiment 1081. Step 1081 is a particular embodiment of step 280. Step 1081 includes steps 1082, 1084, 1086, 1088. In other embodiments, one or more of these steps are omitted. For example in some embodiments, step 1088 is omitted. In some embodiments, step 1084 is omitted. In embodiments that do not use a list of active attachment circuits, step 1086 is omitted.

In step 1082, it is determined whether the signal received is consistent with the configuration data retrieved. For example, it is determined whether the configuration data indicates the customer has subscribed with the provider for a VLAN "17" on port # 4, or an ATM "128/55" on port #20, or a FR "DLCI11" on port #25. If not, control passes to step 1088, described below. Consistency depends upon a policy programmed into the provisioning server. In various embodiments, the router comes up with some sort of AC circuit ID value to send to the provisioning server; and, in response, the provisioning server sends the router a message that indicates whether the value is valid or not. The invalidity may be due to something as simple as an out of range number, or no service being paid for by a customer, among other causes for invalidity.

If it is determined in step 1082 that the signal received is consistent with the configuration data retrieved, then control passes to step 1084, or 1086, or 290. In the illustrated embodiment, control passes first to step 1084, then to step 1086, then to step 290.

In step 1084 the attachment circuit is configured according to the configuration data without human intervention. For example, VLAN "17" (e.g., 122) is joined to VPN 101 with VPLS as indicated by configuration data received from record 300. The AC is joined to the VPN 101 by being switched to PW 140g to PE 120b as indicated by the configuration data received from record 320. The attributes of PW140g are indicated by the configuration data received from record 340. In an alternative embodiment, ATM "128/55" (e.g., 122d) is joined to VPN 100 with VPWS as indicated by configuration data received from record 300. The ATM VC is joined to VPN 100 by being switched to PW 140d. PW 140d connects to PE 120b and AC 122g as indicated by the configuration data received from record 320. The attributes of PW 140d are indicated by the configuration data received from record 340. Similarly, FR "DLCI 11" (e.g., 122a) is joined to VPN 100 with VPWS as indicated by configuration data received from record 300. This AC is being switched to PW 140a to PE 120c and AC 122k as indicated by the configuration data received from record 320. The attributes of PW 140a are indicated by the configuration data received from record 340.

In some embodiments, the provider edge node is already configured for the VPN, and step 1084 is omitted.

In step 1086, the attachment circuit is added to the list 129 for the physical port. By adding the attachment circuit to the list, subsequent data packets for the same attachment circuit are not considered FSOL. For example, VLAN 17 is added to list 129a for physical port # 4. Similarly, ATM "128/55" is added to the list 129a for physical port #20, or FR "DLCI 11" is added to the list 129a for physical port #25. Control then passes to step 290 to process the signal normally. For example, the data packet is switched to the appropriate pseudo wire for delivery to the appropriate target provider edge node.

When a subsequent data packet is received in step 220 for an attachment circuit that is on the list 129 of active attachment circuits, that data packet is not a FSOL, as determined in step 240, and control passes directly to step 250 as described above. It is assumed for purposes of illustration that a second Ethernet frame is received in step 220 on port # 4 with the VLAN tag "17." In step 1042 it is determined that the data packet is not an initial hardware signal and control passes to step 1044. In step 1044 it is determined that the data packet is not a control plane packet to establish a switched virtual circuit and control passes to step 1046. In step 1046, it is determined that VLAN tag "17" appears in the list 129a for port # 4, as shown in Table 3. Therefore control passes to step 250 and ultimately to step 290 to process the data packet normally. For example, the data packet is switched to PWs 140f and 140g for delivery to PE 120c and PE 120b, respectively.

If it is determined in step 1082 that the signal received is not consistent with the configuration data retrieved, then control passes to step 1088. In other embodiments, step 1088 is omitted; the signal is ignored and control passes to step 220 to receive the next signal.

In step 1088, the customer is notified of the difference between the signal received and the configuration data. The configuration data indicates the service for which the customer has subscribed with the provider, e.g., the configuration data indicates the service that the customer has paid for or agreed to pay for. Any method may be used to notify the customer of the discrepancy. For example, in some embodiments an email is sent to an email address of an agent of the customer. In some embodiments an email is sent to an email address of an agent of the provider who then contacts the customer to determine how the customer wants to respond. The customer may be given the option to add or change the subscribed service to be consistent with the actual signals received. For example, if VLAN 46 is received in a data packet but does not appear in any record 300, then the customer may be prompted in step 1088 to pay for a subscription that adds VLAN 46 to VPN 101.

In some embodiments, a message in the protocol received is sent back through the interface where the signal was received. In some embodiments, the message sent back simply indicates that the signal is rejected. In some embodiments, the message indicates the signal is not consistent with the subscribed service. In some embodiments, the message indicates the customer should contact the provider to add the service. In some embodiments, the message indicates the cost of providing the service indicated by the signal and the customer is invited to add the service automatically and prompted for any additional information useful to establish the new service without further intervention by a human network administrator for the provider.

In some embodiments step 1088 includes receiving a response from the customer to add the service consistent with the signal. In such embodiments, control then passes to step 1084, described above, to configure the attachment circuit. Control then passes, in some embodiments, to step 1086 to add the new attachment circuit to the list for the physical port. In some embodiments, step 1088 includes the step of sending the new service request from the customer to the provisioning server to add to the configuration data stored there in records 300, 320, 340.

### 7.3 METHOD FOR MAINTAINING LIST OF ACTIVE ATTACHMENT CIRCUITS

In the illustrated embodiment, attachment circuits are sometimes removed from the list 129 of active attachment circuits. For example, when a control plane data packet to tear down a switched virtual circuit is received, the virtual circuit is removed from the list 129. If the signal received in step 220 is determined in step 240 to not be FSOL, control passes to step 250. In step 250 it is determined whether the signal is a control plane data packet to tear down the switched virtual circuit, e.g. an ATM or FR switched virtual circuit. If not, control passes to step 290 to process the signal normally. However, if it is determined that the signal is a control plane data packet to tear down the switched virtual circuit, then control passes to step 252. For example, if the signal is a control plane data packet to tear down ATM "128/55," control passes to step 252. In step 252, the virtual circuit to be torn down is removed from the list 129a of active attachment circuits. In the example embodiment, ATM "128/55" is removed from the list 129a shown in Table 3. If no attachment circuits remain, a null list is entered.

In some embodiments, a background process checks and maintains the list of attachment circuits.

In some embodiments, the background process periodically checks the non-null entries listed for each physical port to determine whether that attachment circuit still appears in the configuration data. For example, if a customer un-subscribes to a service involving that attachment circuit, then the attachment circuit is expunged from the list. Thus, if the customer un-subscribes from using VLAN 17, and VLAN 17 no longer appears in the configuration data, e.g., no longer appears in any record 300, then VLAN 17 is removed from the list. If the removed attachment circuit is the last attachment circuit, then a null list is associated with the physical port.

In some embodiments, the list of active attachment circuits also includes data that indicates a time when a data packet for that attachment circuit was last received on the physical port. The background process then determines whether sufficient time has elapsed since the last data packet to conclude that the attachment circuit is no longer active. For example, if no traffic is received on an attachment circuit for 12 hours, the attachment circuit is considered inactive and is removed from the list. Any method may be used to record the time since the last traffic on an attachment circuit. For example, in some embodiments, the threshold time for concluding that an attachment circuit is inactive is entered in the list with the attachment circuit identifier whenever a packet is checked for FSOL in step 240. The background process then periodically visits every entry in the list and decrements the time by an amount commensurate with the time to cycle through the entire list. When the time reaches zero, the attachment circuit is concluded to be inactive and is removed from the list.

### 8.0 IMPLEMENTATION MECHANISMS -- HARDWARE OVERVIEW

FIG. 4 is a block diagram that illustrates a computer system 400 upon which an embodiment of the invention may be implemented. The preferred embodiment is implemented using one or more computer programs running on a network element such as a router device. Thus, in this embodiment, the computer system 400 is a router.

Computer system 400 includes a communication mechanism such as a bus 410 for passing information between other internal and external components of the computer system 400. Information is represented as physical signals of a measurable phenomenon, typically electric voltages, but including, in other embodiments, such phenomena as magnetic, electromagnetic, pressure, chemical, molecular atomic and quantum interactions. For example, north and south magnetic fields, or a zero and non-zero electric voltage, represent two states (0,1w) of a binary digit (bit). A sequence of binary digits constitutes digital data that is used to represent a number or code for a character. A bus 410 includes many parallel conductors of information so that information is transferred quickly among devices coupled to the bus 410. One or more processors 402 for processing information are coupled with the bus 410. A processor 402 performs a set of operations on information. The set of operations include bringing information in from the bus 410 and placing information on the bus 410. The set of operations also typically include comparing two or more units of information, shifting positions of units of information, and combining two or more units of information, such as by addition or multiplication. A sequence of operations to be executed by the processor 402 constitute computer instructions.

Computer system 400 also includes a memory 404 coupled to bus 410. The memory 404, such as a random access memory (RAM) or other dynamic storage device, stores information including computer instructions. Dynamic memory allows information stored therein to be changed by the computer system 400. RAM allows a unit of information stored at a location called a memory address to be stored and retrieved independently of information at neighboring addresses. The memory 404 is also used by the processor 402 to store temporary values during execution of computer instructions. The computer system 400 also includes a read only memory (ROM) 406 or other static storage device coupled to the bus 410 for storing static information, including instructions, that is not changed by the computer system 400. Also coupled to bus 410 is a non-volatile (persistent) storage device 408, such as a magnetic disk or optical disk, for storing information, including instructions, that persists even when the computer system 400 is turned off or otherwise loses power.

The term computer-readable medium is used herein to refer to any medium that participates in providing information to processor 402, including instructions for execution. Such a medium may take many forms, including, but not limited to, non-volatile media, volatile media and transmission media. Non-volatile media include, for example, optical or magnetic disks, such as storage device 408. Volatile media include, for example, dynamic memory 404. Transmission media include, for example, coaxial cables, copper wire, fiber optic cables, and waves that travel through space without wires or cables, such as acoustic waves and electromagnetic waves, including radio, optical and infrared waves. Signals that are transmitted over transmission media are herein called carrier waves.

Common forms of computer-readable media include, for example, a floppy disk, a flexible disk, a hard disk, a magnetic tape or any other magnetic medium, a compact disk ROM (CD-ROM), a digital video disk (DVD) or any other optical medium, punch cards, paper tape, or any other physical medium with patterns of holes, a RAM, a programmable ROM (PROM), an erasable PROM (EPROM), a FLASH-EPROM, or any other memory chip or cartridge, a carrier wave, or any other medium from which a computer can read.

Information, including instructions, is provided to the bus 410 for use by the processor from an external terminal 412, such as a terminal with a keyboard containing alphanumeric keys operated by a human user, or a sensor. A sensor detects conditions in its vicinity and transforms those detections into signals compatible with the signals used to represent information in computer system 400. Other external components of terminal 412 coupled to bus 410, used primarily for interacting with humans, include a display device, such as a cathode ray tube (CRT) or a liquid crystal display (LCD) or a plasma screen, for presenting images, and a pointing device, such as a mouse or a trackball or cursor direction keys, for controlling a position of a small cursor image presented on the display and issuing commands associated with graphical elements presented on the display of terminal 412. In some embodiments, terminal 412 is omitted.

Computer system 400 also includes one or more instances of a communications interface 470 coupled to bus 410. Communication interface 470 provides a two-way communication coupling to a variety of external devices that operate with their own processors, such as printers, scanners, external disks, and terminal 412. Firmware or software running in the computer system 400 provides a terminal interface or character-based command interface so that external commands can be given to the computer system. For example, communication interface 470 may be a parallel port or a serial port such as an RS-232 or RS-422 interface, or a universal serial bus (USB) port on a personal computer. In some embodiments, communications interface 470 is an integrated services digital network (ISDN) card or a digital subscriber line (DSL) card or a telephone modem that provides an information communication connection to a corresponding type of telephone line. In some embodiments, a communication interface 470 is a cable modem that converts signals on bus 410 into signals for a communication connection over a coaxial cable or into optical signals for a communication connection over a fiber optic cable. As another example, communications interface 470 may be a local area network (LAN) card to provide a data communication connection to a compatible LAN, such as Ethernet. Wireless links may also be implemented. For wireless links, the communications interface 470 sends and receives electrical, acoustic or electromagnetic signals, including infrared and optical signals, which carry information streams, such as digital data. Such signals are examples of carrier waves

In the illustrated embodiment, special purpose hardware, such as an application specific integrated circuit (IC) 420, is coupled to bus 410. The special purpose hardware is configured to perform operations not performed by processor 402 quickly enough for special purposes. Examples of application specific ICs include graphics accelerator cards for generating images for display, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

In the illustrated computer used as a router, the computer system 400 includes switching system 430 as special purpose hardware for switching information for flow over a network. Switching system 430 typically includes multiple communications interfaces, such as communications interface 470, for coupling to multiple other devices. In general, each coupling is with a network link 432 that is connected to another device in or attached to a network, such as local network 480 in the illustrated embodiment, to which a variety of external devices with their own processors are connected. In some embodiments an input interface or an output interface or both are linked to each of one or more external network elements. Although three network links 432a, 432b, 432c are included in network links 432 in the illustrated embodiment, in other embodiments, more or fewer links are connected to switching system 430. Network links 432 typically provides information communication through one or more networks to other devices that use or process the information. For example, network link 432b may provide a connection through local network 480 to a host computer 482 or to equipment 484 operated by an Internet Service Provider (ISP). ISP equipment 484 in turn provides data communication services through the public, world-wide packet-switching communication network of networks now commonly referred to as the Internet 490. A computer called a server 492 connected to the Internet provides a service in response to information received over the Internet. For example, server 492 provides routing information for use with switching system 430.

The switching system 430 includes logic and circuitry configured to perform switching functions associated with passing information among elements of network 480, including passing information received along one network link, e.g. 432a, as output on the same or different network link, e.g., 432c. The switching system 430 switches information traffic arriving on an input interface to an output interface according to pre-determined protocols and conventions that are well known. In some embodiments, switching system 430 includes its own processor and memory to perform some of the switching functions in software. In some embodiments, switching system 430 relies on processor 402, memory 404, ROM 406, storage 408, or some combination, to perform one or more switching functions in software. For example, switching system 430, in cooperation with processor 404 implementing a particular protocol, can determine a destination of a packet of data arriving on input interface on link 432a and send it to the correct destination using output interface on link 432c. The destinations may include host 482, server 492, other terminal devices connected to local network 480 or Internet 490, or other routing and switching devices in local network 480 or Internet 490.

The invention is related to the use of computer system 400 for implementing the techniques described herein. According to one embodiment of the invention, those techniques are performed by computer system 400 in response to processor 402 executing one or more sequences of one or more instructions contained in memory 404. Such instructions, also called software and program code, may be read into memory 404 from another computer-readable medium such as storage device 408. Execution of the sequences of instructions contained in memory 404 causes processor 402 to perform the method steps described herein. In alternative embodiments, hardware, such as application specific integrated circuit 420 and circuits in switching system 430, may be used in place of or in combination with software to implement the invention. Thus, embodiments of the invention are not limited to any specific combination of hardware and software.

The signals transmitted over network link 432 and other networks through communications interfaces such as interface 470, which carry information to and from computer system 400, are exemplary forms of carrier waves. Computer system 400 can send and receive information, including program code, through the networks 480, 490 among others, through network links 432 and communications interfaces such as interface 470. In an example using the Internet 490, a server 492 transmits program code for a particular application, requested by a message sent from computer 400, through Internet 490, ISP equipment 484, local network 480 and network link 432b through communications interface in switching system 430. The received code may be executed by processor 402 or switching system 430 as it is received, or may be stored in storage device 408 or other non-volatile storage for later execution, or both. In this manner, computer system 400 may obtain application program code in the form of a carrier wave.

Various forms of computer readable media may be involved in carrying one or more sequence of instructions or data or both to processor 402 for execution. For example, instructions and data may initially be carried on a magnetic disk of a remote computer such as host 482. The remote computer loads the instructions and data into its dynamic memory and sends the instructions and data over a telephone line using a modem. A modem local to the computer system 400 receives the instructions and data on a telephone line and uses an infra-red transmitter to convert the instructions and data to an infra-red signal, a carrier wave serving as the network link 432b. An infrared detector serving as communications interface in switching system 430 receives the instructions and data carried in the infrared signal and places information representing the instructions and data onto bus 410. Bus 410 carries the information to memory 404 from which processor 402 retrieves and executes the instructions using some of the data sent with the instructions. The instructions and data received in memory 404 may optionally be stored on storage device 408, either before or after execution by the processor 402 or switching system 430.

### 9.0 EXTENSIONS AND ALTERNATIVES

In this specification and Appendix, the invention has been described with reference to specific embodiments thereof. It will, however, be evident that various modifications and changes may be made thereto without departing from the scope of the invention. The specification and drawings are, accordingly, to be regarded in an illustrative rather than a restrictive sense.

## Claims

1. A method for operating a network interface on an intermediate network node (120) at an edge of a provider network (110) to support a virtual private network, comprising the steps of:
determining (270) whether there is an indication of a Sign of Death, SOD, indicating that communications are terminated over a particular attachment circuit (122) on the network interface on the intermediate network node (120) at an edge of the provider network (110), which attachment circuit (122) is switched with a particular virtual private network, by determining whether a threshold time is exceeded by an elapsed time since the network interface most recently received any message over the attachment circuit (122); and
if it is determined that there is an indication of the SOD, then initiating (271, 272) a new network action in response to the SOD on the particular attachment circuit (122)
wherein
the provider network (110) is a packet-switched network;
the particular virtual private network is a link layer virtual private network encapsulated in a protocol above the link layer; and
the network interface is for a direct communication link to a customer network node (150) outside the provider network (110).

2. A method as recited in Claim 1, said step of initiating the new network action further comprising removing the attachment circuit from association with the particular virtual private network so that network resources associated with switching the attachment circuit at the network interface with the particular virtual private network are released for switching a second attachment circuit with a second virtual private network.

3. A method as recited in Claim 2, said step of initiating the new network action further comprising configuring the network interface to switch the second attachment circuit with the second virtual private network.

4. A method as recited in Claim 3, further comprising receiving configuration data for configuring a plurality of attachment circuits at the network interface, wherein the total resources consumed by the plurality of attachment circuits exceed a capacity of the network interface, whereby the network interface is over-subscribed.

5. A method as recited in Claim 4, wherein the configuration data is received at a provisioning server that indicates participating provider edge nodes in a provider network and a respective level of service pertaining to per-hop behaviour, PHB, parameters for a plurality of pseudowires that span between the participating provider edge nodes.

6. A method as recited in Claim 1 said step of determining whether there is an indication of the SOD further comprising determining whether a threshold time is exceeded by an elapsed time since the network interface most recently received a message that indicates a request to keep the attachment circuit alive.

7. A method as recited in Claim 1, further comprising evaluating activity associated with the particular attachment circuit during a first threshold interval, wherein if no network traffic is detected over a port associated with the particular attachment circuit during the first threshold interval, then a ping message is sent and a second threshold interval is evaluated for a response to the ping message.

8. A method as recited in Claim 1, said step of determining whether there is an indication of the SOD further comprising determining whether the network interface receives a message that indicates a request to tear down the attachment circuit.

9. A method as recited in Claim 1, said step of determining whether there is an indication of the SOD further comprising determining whether a threshold time is exceeded by an elapsed time since the network interface sent to the customer network node a message requesting a response message and no response message is received.

10. A method as recited in Claim 1, said step of determining whether there is an indication of the SOD further comprising receiving a message from a subscription server that a customer subscription for the attachment circuit has ended.

11. An apparatus for configuring a network interface on an intermediate network node (120) at an edge of a provider network (110) to support a virtual private network, comprising:
a provider network interface that is coupled to the provider network (110) for communicating therewith a data packet;
a customer network interface that is coupled to customer premises equipment (150) outside the provider network (110) for communicating therewith a data packet;
one or more processors;
a computer-readable medium; and
one or more sequences of instructions stored in the computer-readable medium, which, when executed by the one or more processors, causes the one or more processors to perform the method of any preceding claim.

12. A computer readable medium including executable instructions which, when executed in a processing system, cause the processing system to perform a method according to any one of claims 1 to 10.

## Patentansprüche

1. Verfahren zum Betrieb einer Netzwerkschnittstelle auf einem Netzwerkzwischenknoten (120) am Rand eines Anbieternetzwerks (110), um ein virtuelles privates Netzwerk zu unterstützen, wobei das Verfahren folgende Schritte umfasst:
Ermitteln (270), ob ein Hinweis eines Todeszeichens (SOD - Sign of Death) vorliegt, das darauf hinweist, dass die Kommunikation über einen bestimmten Zusatzkreis (122) an der Netzwerkschnittstelle auf dem Netzwerkzwischenknoten (120) am Rand des Anbieternetzwerks (110) beendet ist, wobei dieser Zusatzkreis (122) mit einem bestimmten virtuellen privaten Netz vermittelt wird, indem ermittelt wird, ob ein Zeitschwellenwert von einer verstrichenen Zeit überschritten wird, seit die Netzwerkschnittstelle zuletzt eine Nachricht über den Zusatzkreis (122) empfangen hat, und
wenn ermittelt wird, dass ein Hinweis auf SOD vorliegt, Einleiten (271, 272) eines neuen Netzwerkvorgangs als Reaktion auf das SOD des jeweiligen Zusatzschaltkreises (122), wobei
das Anbieternetzwerk (110) ein paketvermitteltes Netzwerk ist;
das bestimmte virtuelle private Netzwerk ist ein virtuelles privates Netzwerk mit Verbindungsschicht ist, das in einem Protokoll über der Verbindungsschicht verkapselt ist, und
die Netzwerkschnittstelle für eine direkte Kommunikationsverbindung zu einem Kundennetzwerkknoten (150) außerhalb des Anbieternetzwerks (110) dient.

2. Verfahren nach Anspruch 1, wobei der Schritt des Einleitens des neuen Netzwerkvorgangs ferner das Entfernen des Zusatzkreises aus einer Zuordnung zu dem bestimmten virtuellen privaten Netzwerk umfasst, so dass Netzwerkressourcen, die der Vermittlung des Zusatzkreises an der Netzwerkschnittstelle mit dem bestimmten virtuellen privaten Netzwerk zugeordnet sind, freigegeben werden, damit ein zweiter Zusatzkreis mit einem zweiten virtuellen privaten Netzwerk vermittelt werden kann.

3. Verfahren nach Anspruch 2, wobei der Schritt der Einleitung des neuen Netzwerkvorgangs ferner das Konfigurieren der Netzwerkschnittstelle umfasst, um den zweiten Zusatzkreis mit dem zweiten virtuellen privaten Netzwerk zu vermitteln.

4. Verfahren nach Anspruch 3, das ferner das Empfangen von Konfigurationsdaten zum Konfigurieren einer Vielzahl von Zusatzkreisen an der Netzschnittstelle umfasst, wobei die Gesamtressourcen, die von der Vielzahl von Zusatzkreisen verbraucht werden, eine Kapazität der Netzwerkschnittstelle überschreiten, wobei für die Netzwerkschnittstelle eine Übernachfrage vorliegt.

5. Verfahren nach Anspruch 4, wobei die Konfigurationsdaten an einem Bereitstellungs-Server empfangen werden, der beteiligten Anbieterrandknoten in einem Anbieternetzwerk sowie ein entsprechendes Service-Niveau in Bezug auf Folgendes anzeigt: pro-Hop-Verhalten, PHB und Parameter für eine Vielzahl von Pseudodrähten, die die teilnehmenden Anbieterrandknoten überspannen.

6. Verfahren nach Anspruch 1, wobei der Schritt des Ermittelns, ob ein Hinweis auf SOD vorliegt, ferner die Ermittlung umfasst, ob ein Zeitschwellenwert von einer verstrichenen Zeit überschritten wird, seit die Netzwerkschnittstelle zuletzt eine Nachricht empfangen hat, die eine Anfrage anzeigt, den Zusatzkreis aufrechtzuhalten.

7. Verfahren nach Anspruch 1, das ferner die Auswertung der Aktivität in Bezug auf den bestimmten Zusatzkreis während eines ersten Schwellenintervalls umfasst, wobei eine Ping-Nachricht gesendet wird und ein zweites Schwellenintervall als Antwort auf die Ping-Nachricht ausgewertet wird, wenn kein Netzwerkverkehr über einen Anschluss erfasst wird, der dem jeweiligen Zusatzkreis während des ersten Schwellenintervalls zugeordnet ist.

8. Verfahren nach Anspruch 1, wobei der Schritt der Ermittlung, ob ein Hinweis auf SOD vorliegt, ferner die Ermittlung umfasst, ob die Netzwerkschnittstelle eine Nachricht empfängt, die eine Anforderung zur Beseitigung des Zusatzkreises anzeigt.

9. Verfahren nach Anspruch 1, wobei der Schritt des Ermittelns, ob ein Hinweis auf SOD vorliegt, ferner die Ermittlung umfasst, ob ein Zeitschwellenwert von einer verstrichenen Zeit überschritten wird, seit die Netzwerkschnittstelle eine Nachricht zum Kundennetzwerkknoten gesendet hat, die eine Antwortnachricht anfordert und keine Antwort empfangen wird.

10. Verfahren nach Anspruch 1, wobei der Schritt der Ermittlung, ob ein Hinweis auf SOD vorliegt, ferner den Empfang einer Nachricht von einem Abonnement-Server umfasst, dass ein Kundenabonnement für den Zusatzkreis beendet ist.

11. Vorrichtung zum Konfigurieren einer Netzwerkschnittstelle auf einem Netzwerkzwischenknoten (120) am Rand eines Anbieternetzwerks (110), um ein virtuelles privates Netzwerk zu unterstützen, wobei die Vorrichtung Folgendes umfasst:
eine Anbieternetzwerkschnittstelle, die mit dem Anbieternetzwerk (110) gekoppelt ist, um zu diesem ein Datenpaket zu senden;
eine Kundennetzwerkschnittstelle, die an Anlagen (150) der Kundeneinrichtung außerhalb des Anbieternetzwerks (110) gekoppelt ist, um zu dieser ein Datenpaket zu senden;
einen oder mehrere Prozessoren;
ein computerlesbares Medium und
eine oder mehrere Sequenzen von Befehlen, die in dem computerlesbaren Medium gespeichert sind und den einen oder die mehreren Prozessoren veranlassen, das Verfahren nach einem der vorhergehenden Ansprüche auszuführen, wenn sie von dem einen oder den mehreren Prozessoren ausgeführt werden.

12. Computerlesbares Medium, das ausführbare Befehle umfasst, die das Verarbeitungssystem veranlassen, ein Verfahren nach einem der Ansprüche 1 bis 10 durchzuführen, wenn sie in einem Verarbeitungssystem ausgeführt werden.

## Revendications

1. Procédé permettant de faire fonctionner une interface de réseau sur un noeud de réseau intermédiaire (120) au niveau d'une périphérie d'un réseau fournisseur (110) à des fins de support d'un réseau privé virtuel, comportant les étapes consistant à :
déterminer (270) s'il y a oui ou non une indication d'un signe de mort, SDM, indiquant que les communications sont terminées sur un circuit de connexion particulier (122) sur l'interface de réseau sur le noeud de réseau intermédiaire (120) au niveau d'une périphérie du réseau fournisseur (110), circuit de connexion (122) qui est commuté par un réseau privé virtuel particulier, en déterminant si oui ou non un temps de seuil est dépassé selon un temps écoulé depuis l'occasion la plus récente où l'interface de réseau a reçu un message quelconque par le circuit de connexion (122) ; et
s'il est déterminé qu'il y a une indication de SDM, alors initialiser (271, 272) une nouvelle action de réseau en réponse au SDM sur le circuit de connexion particulier (122)
dans lequel
le réseau fournisseur (110) est un réseau à commutation de paquets ;
le réseau privé virtuel particulier est un réseau privé virtuel à couche de liaison encapsulé dans un protocole au-dessus de la couche de liaison ; et
l'interface de réseau est pour une liaison de communication directe au niveau d'un noeud de réseau client (150) à l'extérieur du réseau fournisseur (110).

2. Procédé selon la revendication 1, ladite étape consistant à initialiser la nouvelle action de réseau comportant par ailleurs l'étape consistant à retirer le circuit de connexion de toute association avec le réseau privé virtuel particulier de telle sorte que les ressources de réseau associées à l'étape consistant à commuter le circuit de connexion au niveau de l'interface de réseau avec le réseau privé virtuel particulier sont libérées à des fins de commutation d'un second circuit de connexion avec un second réseau privé virtuel.

3. Procédé selon la revendication 2, ladite étape consistant à initialiser la nouvelle action de réseau comportant par ailleurs l'étape consistant à configurer l'interface de réseau à des fins de commutation du second circuit de connexion avec le second réseau privé virtuel.

4. Procédé selon la revendication 3, comportant par ailleurs l'étape consistant à recevoir des données de configuration pour configurer une pluralité de circuits de connexion au niveau de l'interface de réseau, dans lequel les ressources totales consommées par la pluralité de circuits de connexion dépassent une capacité de l'interface de réseau, ce par quoi l'interface de réseau est surabonnée.

5. Procédé selon la revendication 4, dans lequel les données de configuration sont reçues au niveau d'un serveur d'approvisionnement qui indique des noeuds de périphérie de fournisseurs participants dans un réseau fournisseur et un niveau respectif de service se rapportant à des paramètres de comportement par saut, PHB, pour une pluralité de pseudofils qui s'étendent entre les noeuds de périphérie de fournisseurs participants.

6. Procédé selon la revendication 1, ladite étape consistant à déterminer s'il y a une indication du SDM comportant par ailleurs l'étape consistant à déterminer si oui ou non un temps de seuil est dépassé selon un temps écoulé depuis l'occasion la plus récente où l'interface de réseau a reçu un message qui indique une demande de maintien du circuit de connexion en marche.

7. Procédé selon la revendication 1, comportant par ailleurs l'étape consistant à évaluer toute activité associée au circuit de connexion particulier au cours d'un premier intervalle de seuil, dans lequel, si aucun trafic de réseau n'est détecté sur un port associé au circuit de connexion particulier au cours du premier intervalle de seuil, un message Ping est alors envoyé et un second intervalle de seuil est évalué à la recherche d'une réponse au message Ping.

8. Procédé selon la revendication 1, ladite étape consistant à déterminer si oui ou non il y a une indication du SDM comportant par ailleurs l'étape consistant à déterminer si oui ou non l'interface de réseau reçoit un message qui indique une demande de démontage du circuit de connexion.

9. Procédé selon la revendication 1, ladite étape consistant à déterminer si oui ou non il y a une indication du SDM comportant par ailleurs l'étape consistant à déterminer si oui ou non un temps de seuil est dépassé selon un temps écoulé depuis l'occasion où l'interface de réseau a envoyé au noeud de réseau client un message demandant un message de réponse et aucun message de réponse n'a été reçu.

10. Procédé selon la revendication 1, ladite étape consistant à déterminer si oui ou non il y a une indication du SDM comportant par ailleurs l'étape consistant à recevoir un message en provenance d'un serveur d'abonnements indiquant qu'un abonnement client pour le circuit de connexion a pris fin.

11. Appareil permettant de configurer une interface de réseau sur un noeud de réseau intermédiaire (120) au niveau d'une périphérie d'un réseau fournisseur (110) à des fins de support d'un réseau privé virtuel, comportant :
une interface de réseau fournisseur qui est couplée au réseau fournisseur (110) pour communiquer un paquet de données avec celui-ci ;
une interface de réseau client qui est couplée à l'équipement des locaux clients (150) en dehors du réseau fournisseur (110) pour communiquer un paquet de données avec celui-ci ;
un ou plusieurs processeurs ;
un support lisible par ordinateur ; et
une ou plusieurs séquences d'instructions stockées dans le support lisible par ordinateur, qui, quand elle(s) est (sont) exécutée(s) par lesdits un ou plusieurs processeurs, amène(nt) lesdits un ou plusieurs processeurs à effectuer le procédé selon l'une quelconque des revendications précédentes.

12. Support lisible par un ordinateur comprenant des instructions exécutables qui, quand elles sont exécutées dans un système de traitement, amènent le système de traitement à effectuer un procédé selon l'une quelconque des revendications 1 à 10.
